# EUROPEAN PATENT APPLICATION

(11) **EP 2 672 559 A1**
(43) Date of publication of application: **11.12.2013**
(21) Application number: 12742108.9
(22) Date of filing: 24.01.2012
(51) Int. Cl.: H01M 8/16, H01M 4/90, H01M 4/96, C12M 1/00, C12M 1/40

(54) **FUEL CELL, METHOD FOR MANUFACTURING FUEL CELL, ELECTRONIC APPARATUS, NICOTINAMIDE ADENINE DINUCLEOTIDE-IMMOBILIZED ELECTRODE, NICOTINAMIDE ADENINE DINUCLEOTIDE-IMMOBILIZED CARRIER, DEVICE USING ENZYME REACTION, PROTEIN-IMMOBILIZED ELECTRODE, AND PROTEIN-IMMOBILIZED CARRIER**

(30) Priority: 31.01.2011 JP 2011018333; 12.12.2011 JP 2011271224
(71) Applicant: Sony Corporation, Tokyo 108-0075 (JP)
(72) Inventor: FUJITA, Shuji, Tokyo 108-0075 (JP); MITA, Hiroki, Tokyo 108-0075 (JP); YAMANOI, Shun, Tokyo 108-0075 (JP); SAKAI, Hideki, Tokyo 108-0075 (JP); TOKITA, Yuichi, Tokyo 108-0075 (JP); TABATA, Seiichiro, Tokyo 108-0075 (JP); SAMUKAWA, Tsunetoshi, Tokyo 108-0075 (JP); NAKAGAWA, Takaaki, Tokyo 108-0075 (JP)
(74) Representative: Müller - Hoffmann & Partner
(86) International application number: PCT/JP2012/051907
(87) International publication number: WO 2012/105462

(57) **Abstract**

Provided is a fuel cell capable of preventing elution of nicotinamide adenine dinucleotide and/or a derivative thereof immobilized on an electrode, and capable of preventing performance degradation due to elution, and a method for manufacturing the fuel cell.

A biofuel cell having a structure in which a positive electrode and a negative electrode face each other via a proton conductor, the biofuel cell configured so that an enzyme is used to extract electrons from a fuel, wherein the negative electrode is configured from an electrode including carbon and/or an inorganic compound having pores with a size of 2 nm or more and 100 nm or less on the surface, nicotinamide adenine dinucleotide and/or a derivative thereof being immobilized on the carbon and/or the inorganic compound. A carbon particle, a carbon sheet, or carbon fiber is used as the carbon. Biocarbon, ketjen black, activated carbon, or the like is used as the carbon particle. An enzyme necessary for the enzyme reaction may also be immobilized on the carbon via a pyrene derivative or the like as necessary.

## Description

### Technical Field

The present disclosure relates to a fuel cell, method for producing a fuel cell, an electronic apparatus, a nicotinamide adenine dinucleotide-immobilized electrode, a nicotinamide adenine dinucleotide-immobilized carrier, an enzyme reaction utilization device, a protein-immobilized electrode and a protein-immobilized carrier. More specifically, for example, the present disclosure is suitable for application to a biofuel cell using glucose as a fuel or substrate, a biosensor, a bioreactor or various electronic apparatuses using a biofuel cell as a power source.

### Background Art

As an enzyme using nicotinamide adenine dinucleotide as a coenzyme, there are an enzyme having high substrate specificity and suitable for a biosensor, a hyperactive enzyme suitable for a fuel cell using multistage enzyme reaction (biofuel cell) and the like (for example, refer to PTLs 1 to 12).

Until now, attempts to immobilize nicotinamide adenine dinucleotide on an electrode and a carrier in a biosensor, biofuel cell, bioreactor and the like have been made. For example, it has been proposed that an NAD⁺ derivative is bonded to a carrier such as sepharose by covalent bonding (refer to PTL 13). In addition, a bioreactor in which NAD⁺ and NADH are adsorbed onto a porous polymer such as acetyl cellulose having a pore size of 0.1 to 10 µm has been proposed (refer to PTL 14). Moreover, it has been reported that an NAD derivative is bonded to a polyacrylamide gel (refer to NPL 1). Furthermore, it has been reported that an NAD⁺ derivative is covalently bonded to an electrode (refer to NPL 2). Also, it has been reported that silica nanoparticles are etched to be covalently bonded to an NAD⁺ derivative (refer to NPL 3). In addition, an application to a biosensor by covalently bonding an NAD⁺ derivative to chitosan has been reported (refer to NPL 4). Moreover, immobilization by covalently bonding NADH to a polymer due to alkylation has been reported (refer to NPL 5). Furthermore, immobilization by covalently bonding NADH to mesoporous silica has been reported (refer to NPL 6). Furthermore, an application to a biosensor by adsorbing and immobilizing NAD⁺ onto a carbon nanotube has been reported (refer to NPL 7).

In addition, studies in which nicotinamide adenine dinucleotide is immobilized on an electrode through application of various coupling reactions such as an amide bond by adding various functional groups to the nicotinamide adenine dinucleotide have been conducted (refer to NPLs 1 to 6).

Here, while it has nothing to do with immobilization of nicotinamide adenine dinucleotide, a biosensor and a fuel cell provided with an electric material including a carbon porous body having an average pore size of 2 to 50 nm and an oxidoreductase carried on the carbon porous body have been proposed (refer to PTL 15).

### Citation List

### Patent Literature

PTL 1: Japanese Unexamined Patent Application Publication No. 2000-133297
PTL 2: Japanese Unexamined Patent Application Publication No. 2003-282124
PTL 3: Japanese Unexamined Patent Application Publication No. 2004-71559
PTL 4: Japanese Unexamined Patent Application Publication No. 2005-13210
PTL 5: Japanese Unexamined Patent Application Publication No. 2005-310613
PTL 6: Japanese Unexamined Patent Application Publication No. 2006-24555
PTL 7: Japanese Unexamined Patent Application Publication No. 2006-49215
PTL 8: Japanese Unexamined Patent Application Publication No. 2006-93090
PTL 9: Japanese Unexamined Patent Application Publication No. 2006-127957
PTL 10: Japanese Unexamined Patent Application Publication No. 2006-156354
PTL 11: Japanese Unexamined Patent Application Publication No. 2007-12281
PTL 12: Japanese Unexamined Patent Application Publication No. 2007-35437
PTL 13: Japanese Unexamined Patent Application Publication No. 5-328996
PTL 14: Japanese Unexamined Patent Application Publication No. 8-304329
PTL 15: Japanese Unexamined Patent Application Publication No. 2007-218795
PTL 16: Japanese Unexamined Patent Application Publication No. 2008-273816

### Non Patent Literature

NPL 1: "Application of polylysine bound succinyl-NA to a membrane reactor", Yamazaki,Y., Maeda,H., Suzuki,H, Biotechnol.Bioeng 1976., 18(12), 1761-1775
NPL 2: "NAD+ -Dependent Enzyme Electrodes: Electrical Contact of Cofactor-Dependent Enzymes and Electrodes", Amos Bardea, Eugenii Katz, Andreas F.Bulckmann and Itamar Willner, J.Am.Chem.Soc.1997, 119, 9114-9119
NPL 3: "Nanoparticle-supported multi-enzyme biocatalysis with in situ cofactor Regeneration", Wenfang Liu, Songping Zhang and Ping Wang, Journal of Biotechnology 139(2009)102-107
NPL 4: "Coimmobilization of Dehydrogenases and Their Cofactors in Electrochemical Biosensors", Maogen Zhang, Conor Muller and Waldemar Gorski,Anal.Chem.2007, 79, 2446-2450
NPL 5: "A Simple Procedure for Covalent Immobilization of NADH in a Soluble and Enzymically Active Form", Carl W. Fuller, Joyce Rachel Rubin, and Harold J. Bright, Eur. J. Biochem.103, 421-430(1980)
NPL 6: "Enabling Multienzyme Biocatalysis Using Nanoporous Materials", Bilal E1-Zahab,Hongfei Jia, Ping Wang, Biotechnol.Bioeng.2004,87(2),178-183
NPL 7: "Noncovalent Attachment of NAD + Cofactor onto Carbon Nanotubes for Preparation of Integrated Dehydrogenase-Based Electrochemical Biosensors", Haojie Zhou, Zipin Zhang, Ping Yu, Lei Su, Takeo Ohsaka and Lanqun Mao, Langmuir 2010, 26(8), 6028-6032

### Summary of Invention

### Technical Problem

However, even using the methods in PTLs 13 and 14 and NPLs 1 to 7, the immobilization of nicotinamide adenine dinucleotide is not sufficient and elution of nicotinamide adenine dinucleotide cannot be effectively prevented. Therefore, performance degradation of a biosensor, a biofuel cell, a bioreactor and the like is caused by the elution of nicotinamide adenine dinucleotide.

In addition, the methods in the cited literatures 1 to 6 in which various functional groups are added to nicotinamide adenine dinucleotide causes a new problem that the substrate reactivity of an enzyme remarkably deteriorates by adding these functional groups, which is inadvisable.

From the above-described reasons, the use of an enzyme which is effective for a biosensor and uses nicotinamide adenine dinucleotide having high substrate specificity as an coenzyme, an enzyme group which is effective for a biofuel cell and uses nicotinamide adenine dinucleotide as a coenzyme, a hyperactive enzyme which is effective for both a biosensor and biofuel cell and uses nicotinamide adenine dinucleotide as a coenzyme and the like are actually avoided.

Also, in the bioreactor using the enzyme using nicotinamide adenine dinucleotide as a coenzyme, regardless of the fact that nicotinamide adenine dinucleotide is relatively expensive, it is necessary to add new or re-refined nicotinamide adenine dinucleotide in an hourly reaction, which becomes quite costly.

Here, a problem to be solved by the present disclosure is to provide a fuel cell capable of effectively preventing elution of nicotinamide adenine dinucleotide and/or a derivative thereof, or an enzyme immobilized on an electrode and preventing performance degradation due to elution and a production method therefor.

Another problem to be solved by the present disclosure is to provide a high-performance electronic apparatus using the excellent fuel cell.

Still another problem to be solved by the present disclosure is to provide a nicotinamide adenine dinucleotide-immobilized electrode and a nicotinamide adenine dinucleotide-immobilized carrier preferably used in an enzyme reaction utilization device such as a fuel cell, a biosensor, a bioreactor and the like.

Still another problem to be solved by the present disclosure is to provide an enzyme reaction utilization device capable of effectively preventing elution of nicotinamide adenine dinucleotide and/or a derivative thereof, or an enzyme immobilized on an electrode or a carrier and preventing performance degradation due to elution.

Still another problem to be solved by the present disclosure is to provide a protein-immobilized electrode and a protein-immobilized carrier capable of effectively preventing elution of protein such as an enzyme immobilized on an electrode or a carrier and preventing performance degradation due to elution.

The above-described problems and other problems thereof will become apparent in the following description of the specification with reference to the accompanying drawings.

### Solution to Problem

The present inventors performed intensive research for solving the above-described problems. As a result thereof, it was found that using carbon having nanometer-size micropores on the surface thereof, while high reactivity of nicotinamide adenine dinucleotide with an enzyme and the like is retained, the nicotinamide adenine dinucleotide can be strongly immobilized, and thus, elution of nicotinamide adenine dinucleotide can be effectively prevented. As a result of further research, the inventors reached the conclusion that even using an inorganic compound and other inorganic compounds having similar properties to carbon, instead of carbon, while high reactivity of nicotinamide adenine dinucleotide with an enzyme and the like is retained, the nicotinamide adenine dinucleotide can be strongly immobilized, and thus, elution of nicotinamide adenine dinucleotide can be effectively prevented.

As a result of further research, it was found that using carbon having nanometer-size micropores on the surface thereof, while protein is activated, more generally, functions are highly retained by bonding protein such as an enzyme to the carbon through a specific compound such as a pyrene derivative, the protein can be strongly immobilized, and thus, elution of protein can be effectively prevented.

That is, in order to solve the above-mentioned problems, the present disclosure provides a fuel cell including:
a positive electrode;
a negative electrode; and
a proton conductor provided between the positive electrode and the negative electrode,
in which the negative electrode is configured of an electrode which includes carbon and/or an inorganic compound having pores with a size of 2 nm or more to 100 nm or less on the surface, and in which nicotinamide adenine dinucleotide and/or a derivative thereof are immobilized on the carbon and/or the inorganic compound.

In addition, when a fuel cell having a positive electrode, a negative electrode and a proton conductor provided between the positive electrode and the negative electrode is produced, the present disclosure provides a method for producing a fuel cell including immobilizing nicotinamide adenine dinucleotide and a derivative thereof to carbon and/or an inorganic compound using an electrode which includes the carbon and/or the inorganic compound having pores with a size of 2 nm or more and 100 nm or less on the surface as the negative electrode.

In addition, the present disclosure provides an electronic apparatus including: one or plural fuel cells,
in which at least one fuel cell has
a positive electrode,
a negative electrode and
a proton conductor provided between the positive electrode and the negative electrode, and
the negative electrode is configured of an electrode which includes carbon and/or an inorganic compound having pores with a size of 2 nm or more to 100 nm or less on the surface, and in which nicotinamide adenine dinucleotide and/or a derivative thereof are immobilized on the carbon and/or the inorganic compound.

In the present disclosure, nicotinamide adenine dinucleotide refers to NAD⁺/NADH, and a derivative of nicotinamide adenine dinucleotide refers to one obtained by performing chemical modification of amine and carboxylic acid to nitrogen (N) of an adenine skeleton of nicotinamide adenine dinucleotide and the like, in addition to nicotinamide adenine dinucleotide phosphate (NADP⁺/NADPH). For example, since the respective molecular weights of NAD⁺ and NADP⁺ are 663 and 744, both are almost identical in size. Since other derivatives have a small number of functional groups, it can be considered that a difference with NAD⁺ becomes smaller. Since NAD⁺ itself originally has two phosphate groups in the skeleton, it can be considered that even when NAD⁺ is changed to NADP⁺ and the charge is changed, there is no remarkable change in the chemical interaction with the surface of carbon or an inorganic compound.

In order to reliably immobilize nicotinamide adenine dinucleotide and a derivative thereof on carbon and/or an inorganic compound and further retain high reactivity with an enzyme, preferably, the surface of the carbon and/or the inorganic compound has pores with a size (pore size) of 2 nm or more and 100 nm or less and further has pores with a size of 0.5 nm or more and less than 2 nm. More preferably, the surface of the carbon and/or the inorganic compound has pores with a size of 0.5 nm or more and less than 2 nm and pores with a size of 4 nm or more and 20 nm or less.

As carbon having pores with a size of 2 nm or more and 100 nm or less and pores with a size of 0.5 nm or more and less than 2 nm on the surafce, for example, at least one selected from the group consisting of carbon particles, carbon sheets and carbon fibers can be used. For example, the carbon particles include at least one selected from the group consisting of activated carbon, carbon black and biocarbon, and other carbon other than the above-mentioned carbon particle may be used. Examples of the activated carbon include wood charcoals such as oak charcoal, sawtooth oak charcoal, cedar charcoal, fir charcoal, and cypress charcoal, rubber charcoal, bamboo charcoal, sawdust charcoal, coconut shell charcoal and the like. The carbon black includes furnace black, acetylene black, channel black, thermal black, ketjen black and the like. The biocarbon is a porous carbon material that is obtained by using a plant-derived material in which the content of silicon is 5% by weight or more as a raw material and has a specific surface area value as determined by the nitrogen BET method of 10 m²/g or more, a silicon content of 1% by weight or less, and a pore volume as determined by the BJH method and MP method of 0.1 cm³/g or more (refer to PTL 16).

For example, the inorganic compound is a compound containing various metals, silicon (Si) and the like, and typically, at least one selected from the group consisting of oxides, nitrides, carbides, sulfides, sulfates, phosphates and chlorides. Examples of the metals include aluminium (Al), titanium (Ti), tantalum (Ta), hafnium (Hf), zirconium (Zr), niobium (Nb), vanadium (V), cerium (Ce), tin (Sn), zinc (Zn), gallium (Ga), magnesium (Mg), barium (Ba), indium (In), lithium (Li), copper (Cu), iridium (Ir), calcium (Ca), strontium (Sr), ruthenium (Ru) and the like, but there is no limitation thereto. Examples of the oxides include silica dioxide (silica) (SiO₂), aluminium oxide (alumina) (Al₂O₃), titanium oxide (TiO₂), tantalum oxide (Ta₂O₅), hafnium oxide (HfO₂), zirconium oxide (ZrO₂), niobium oxide (NbO), vanadium oxide (V₂O₅, V₂O₃, VO₂), cerium oxide (CeO₂), tin oxide (SnO₂), zinc oxide (ZnO), gallium oxide (Ga₂O), magnesium oxide(MgO), barium oxide (BaO), indium oxide (InO₂), lithium oxide (Li₂O), copper oxide (Cu₂O, CuO), iridium oxide (IrO₂), calcium oxide (CaO), strontium titanate (SrTiO₃), ruthenium oxide (RuO₂) and the like, but there is no limitation thereto. Examples of the nitrides include silicon nitride (Si₃N₄), titanium nitride (TiN), tungsten nitride (WN), boron nitride (BN), lithium nitride (LiN) and the like, but there is no limitation thereto. Examples of the carbides include silicon carbide (SiC), HfC (hafnium carbide), zirconium carbide (ZrC), tungsten carbide (WC), titanium carbide (TiC), chromium carbide (CrC) and the like, but there is no limitation thereto. Examples of the sulfides include zinc sulfide (ZnS) and the like, but there is no limitation thereto. Examples of the sulfates include nickel sulfate (NiSO₄) and the like, but there is no limitation thereto. Examples of the phosphates include aluminium phosphate (AlPO₄) and the like, but there is no limitation thereto. Examples of the chlorides include aluminium chloride (AlCl₃), copper chloride (CuCl₂) and the like, but there is no limitation thereto. Among these inorganic compounds, preferably, for example, compounds having the properties of a solid acid (solid substance of which the surface exhibits acidic properties) such as Al₂O₃, V₂O₅, ZnS, NiSO₄, AlPO₄ and AlCl₃ can be used. These inorganic compounds are similar to carbon in associativity with nicotinamide adenine dinucleotide or a derivative thereof by electrostatic interaction, polarity, van der Waals' force and the like, and thus, the adsorption of nicotinamide adenine dinucleotide or the derivative thereof is possible. While there are conductive compounds and nonconductive compounds in these inorganic compounds, even in the nonconductive compounds, it is an electron mediator that finally transfers electrons to an electrode, and thus, for example, the nicotinamide adenine dinucleotide and/or the derivative thereof and an enzyme are retained in the inorganic compounds to transfer the electrons to the electrode by the electron mediator.

As the material of the electrode, for example, simple substances of at least one metal selected from the group consisting of platinum (Pt), silver (Ag), gold (Au), ruthenium (Ru), rhodium (Rh), osmium (Os), niobium(Nb), molybdenum (Mo), indium (In), iridium (Ir), zinc (Zn), manganese (Mn), iron (Fe), cobalt (Co), titanium (Ti), vanadium (V), chromium (Cr), palladium (Pd), rhenium (Re), tantalum (Ta), tungsten (W), zirconium (Zr), germanium (Ge) and hafnium (Hf) or alloys thereof can be used. In addition to above-mentioned metals, as the material of the electrode, alloys such as alumel, brass, duralumin, bronze, nickel, platinum rhodium, permalloy, permendur, nickel silver and phosphor bronze, conductive polymers such as polyacetylene, carbon-based materials such as carbon felt, carbon paper, carbon fiber, or laminates formed of carbon fine particles, borides such as HfB₂, NbB, CrB₂ and B₄C, nitrides such as TiN and ZrN, silicides such as VSi₂, NbSi₂, MoSi₂ and TaSi₂ and composite materials of these can be used.

As necessary, the entire electrode may be configured with the carbon and/or the inorganic compound having pores with a size of 2 nm or more and 100 nm or less or pores with size of 0.5 nm or more and less than 2 nm on the surface. When the entire electrode is configured with the carbon and/or the inorganic compound having pores with a size of 2 nm or more and 100 nm or less or pores with size of 0.5 nm or more and less than 2 nm on the surface, as a binder, for example, polymers containing a fluorine atom such as polytetrafluoroethylene (PTFE), vinylidene polyfluoride (PVDF) and vinyl polyfluoride (PVF) and copolymers thereof, and polymers of copolymers of these monomers and ethylene, styrene and the like may be used. Furthermore, in addition to polymers such as polystyrene, polyethylene and polypropylene, hydrophilic polymers such as polyacrylic acid, polylysine and carboxymethylcellulose, and conductive polymers such as polyaniline, polypyrrole and polyaniline-sulfonic acid which is a derivative thereof may be used. Moreover, these polymers may be used by blending.

As the fuel, various fuels such as glucose can be used and selected as necessary. Examples of fuels other than glucose include various organic acids involved in the citric acid cycle, sugar and organic acids involved in a pentose phosphoric acid cycle and glycolytic system and the like. The various organic acids involved in the citric acid cycle include lactic acid, pyruvic acid, acetyl CoA, citric acid, isocitric acid, α-ketoglutaric acid, succinyl CoA, succinic acid, fumaric acid, malic acid, oxaloacetic acid, and the like. The sugar and organic acids involved in the pentose phosphate cycle and glycolytic system include glucose 6-phosphate, 6-phosphogluconolactone, 6-phosphogluconic acid, ribulose-5-phosphate, glyceryl aldehyde 3-phosphate, fructose 6-phosphate, xylilose 5-phosphate, sedoheptulose 7-phosphate, erythrose 4-phosphate, phosphoenolpyruvic acid, 1,3-bisphosphoglyceric acid, ribose 5-phosphate, and the like. As the fuel, alcohols such as methanol and ethanol may be used.

These fuels are typically used in the form of a fuel solution in which the fuel is dissolved in a known buffer solution in the related art such as a phosphate buffer, a tris buffer solution, or the like.

On the carbon and/or the inorganic compound of the electrode which includes the carbon and/or the inorganic compound having pores with a size of 2 nm or more and 100 nm or less or pores with size of 0.5 nm or more and less than 2 nm on the surface, typically, one or plural types of enzymes using nicotinamide adenine dinucleotide and/or as derivative thereof as a coenzyme are immobilized, in addition to the nicotinamide adenine dinucleotide and/or the derivative thereof. Electrons are extracted from the fuel using the enzyme and nicotinamide adenine dinucleotide and/or the derivative thereof. The enzyme typically contain an oxidase which decomposes a fuel such as glucose by promoting oxidation and further contains a coenzyme oxidase which returns a coenzyme reduced with oxidation of the fuel to an oxidized form and transfers the electrons to the negative electrode through the electron mediator. Specifically, the enzyme preferably contains an oxidase which decomposes a fuel such as glucose by promoting oxidation and a coenzyme oxidase which returns a coenzyme reduced with the oxidase to an oxidized form. When nicotinamide adenine dinucleotide which is a coenzyme is returned to an oxidized form by the action of the coenzyme oxidase, electrons are produced, and transferred to the negative electrode from the coenzyme oxidase through the electron mediator. For example, when glucose is used as the fuel, for example, glucose dehydrogenase (GDH) (particularly, NAD⁺/NADH-dependent glucose dehydrogenase) is used as the oxidase, and for example, diaphorase (DI) is used as the coenzyme oxidase.

When the enzyme is immobilized on the carbon and/or the inorganic compound, from the viewpoint of stronger immobilization of the enzyme, using a compound for enzyme immobilization having a portion to be bonded to the carbon and/or the inorganic compound and a portion to be bonded to the enzyme, the enzyme is preferably bonded to the carbon and/or the inorganic compound via the compound for enzyme immobilization. The compound for enzyme immobilization is typically bonded to the carbon and/or the inorganic compound inside the pores on the surface of the carbon and/or the inorganic compound. As the compound for enzyme immobilization, various known compounds in the related art can be used and selected as necessary. In this manner, the enzyme is bonded to the carbon and/or the inorganic compound via the compound for enzyme immobilization, which is effective for direct electron transfer from the enzyme to the carbon and/or the inorganic compound.

On the carbon and/or the inorganic compound of the electrode which includes the carbon and/or the inorganic compound having pores with a size of 2 nm or more and 100 nm or less or pores with size of 0.5 nm or more and less than 2 nm on the surface, typically, the electron mediator is immobilized while high reactivity with the enzyme or the like is retained, in addition to the nicotinamide adenine dinucleotide and/or the derivative thereof. As the electron mediator, any mediator can be basically used, but a compound having a quinone skeleton is preferably used. Specifically, for example, 2,3-dimethoxy-5-methyl-1,4-benzoquinone (Q0) and compounds having a naphthoquinone skeleton, for example, various naphthoquinone derivatives such as 2-amino-1,4-naphthoquinone (ANQ), 2-amino-3-methyl-1,4-naphthoquinone (AMNQ), 2-methyl-1,4-naphthoquinone (VK3), 2-amino-3-carboxy-1,4-naphthoquinone (ACNQ) and vitamin K1 can be used. As the compound having a quinone skeleton, for example, anthraquinone and derivatives thereof can also be used. The electron mediator may contain one or two or more types of other compounds functioning as an electron mediator, as necessary, other than the compound having a quinone skeleton.

When the enzyme is immobilized on the positive electrode, the enzyme typically includes an enzyme which reduces oxygen. As the enzyme which reduces oxygen, for example, bilirubin oxidase, laccase, ascorbate oxidase, and the like can be used. In this case, in addition to the enzyme, an electron mediator is preferably immobilized on the positive electrode. As the electron mediator, for example, potassium hexacyanoferrate, potassium octacyanotungstate, and the like can be used. The electron mediator is preferably immobilized at a sufficiently high concentration, for example, 0.64×10⁻⁶ mol/mm² or more on an average.

As the proton conductor, any one of various conductors can be used and selected as necessary. Specific examples include cellophane, perfluorocarbonsulfonic acid (PFS) resin films, trifluorostyrene derivative copolymer films, phosphoric acid-impregnated polybenzimidazole films, aromatic polyetherketonesulfonic acid films, PSSA-PVA (polystyrenesulfonic acid polyvinyl alcohol copolymer), PSSA-EVOH (polystyrenesulfonic acid ethylenevinyl alcohol copolymer), ion-exchange resins having fluorine-containing carbonsulfonic acid groups (Nafion (trade name, US DuPont, Inc.) and the like), and the like.

When an electrolyte containing a buffer solution (buffer substance) is used as the proton conductor, it is preferred that the buffer ability of the enzyme can be sufficiently achieved during high-output operation, and the enzyme is allowed to sufficiently exhibit the inherent ability. For this purpose, it is effective to control the concentration of the buffer substance contained in the electrolyte to 0.2 M or more and 2.5 M or less, preferably 0.2 M or more and 2 M or less, more preferably 0.4 M or more and 2 M or less, still more preferably 0.8 M or more and 1.2 M or less. Generally, any buffer substance may be used as long as pKₐ is 6 or more and 9 or less. Specific examples include dihydrogen phosphate ion (H₂PO₄⁻), 2-amino-2-hydroxymethyl-1,3-propanediol (abbreviation, tris), 2-(N-morpholino)ethanesulfonic acid (MES), cacodylic acid, carbonic acid (H₂CO₃), hydrogen citrate ion, N-(2-acetamido) iminodiacetic acid (ADA), piperazine-N,N'-bis(2-ethanesulfonic acid) (PIPES), N-(2-acetamido)-2-aminoethanesulfonic acid (ACES), 3-(N-morpholino)propanesulfonic acid (MOPS), N-2-hydroxyethylpiperazine-N'-2-ethanesulfonic acid (HEPES), N-2-hydroxyethylpiperazine-N'-3-propanesulfonic aid (HEPPS), N-[tris(hydroxymethyl)methyl]glycine (abbreviation, tricine), glycylglycine, N,N-bis(2-hydroxyethyl)glycine (abbreviation, vicine), and the like. Examples of materials which produce dihydrogen phosphate ion (H₂PO₄⁻) include sodium dihydrogen phosphate (NaH₂PO₄), potassium dihydrogen phosphate (KH₂PO₄), and the like. As the buffer substance, a compound containing an imidazole ring is also preferred. Specific examples of the compound containing an imidazole ring include imidazole, triazole, pyridine derivatives, bipyridine derivatives, imidazole derivatives (histidine, 1-methylimidazole, 2-methylimidazole, 4-methylimidazole, 2-ethylimidazole, ethyl imidazole-2-carboxylate, imidazole-2-carboxyaldehyde, imidazole-4-carboxylic acid, imidazole-4,5-dicarboxylic acid, imidazol-1-yl-acetic acid, 2-acetylbenzimidazole, 1-acetylimidazole, N-acetylimidazole, 2-aminobenzimidazole, N-(3-aminopropyl)imidazole, 5-amino-2-(trifluoromethyl)benzimidazole, 4-azabenzimidazole, 4-aza-2-mercaptobenzimidazole, benzimidazole, 1-benzylimidazole, and 1-butylimidazole), and the like. As necessary, in addition to the buffer substances, for example, at least one acid selected from the group consisting of hydrochloric acid (HCl), acetic acid (CH₃COOH), phosphoric acid (H₃PO₄), and sulfuric acid (H₂SO₄) may be added as a neutralizing agent. This can retain high activity of the enzyme. The pH of the electrolyte containing the buffer substance is preferably close to 7 but may be generally any one of 1 to 14.

Various materials can be used as the electrode material of the positive electrode and, for example, carbon-based materials such as porous carbon, carbon pellets, carbon felt, carbon paper, and the like can be used. As the electrode material, a porous conductive material containing a skeleton formed of a porous material and a material which covers at least a portion of the skeleton and which contains a carbon-based material as a main component can also be used (refer to PTL 12).

The fuel cell can be used in almost all applications requiring electric power, for example, an electronic apparatus, movable bodies (an automobile, a two-wheeled vehicle, an aircraft, a rocket, a spacecraft, and the like), a power device, a construction machine, a machine tool, a power system, a co-generation system, and the like, regardless of size, and the output, size, shape, fuel type, and the like are determined according to application.

The electronic apparatus may be basically any one of the types including a portable type and a stationary type, but specific examples thereof include a cellular phone, mobile apparatuses (a portable digital assistance (PDA) and the like), a robot, a personal computer (including both a desktop type and a laptop type), a game apparatus, a camcorder (video tape recorder), automobile-installed equipment, house electric appliances, industrial products, and the like.

In addition, the present disclosure provides a nicotinamide adenine dinucleotide-immobilized electrode that is configured of an electrode which includes carbon and/or an inorganic compound having pores with a size of 2 nm or more to 100 nm or less on the surface, and in which nicotinamide adenine dinucleotide and/or a derivative thereof are immobilized on the carbon and/or the inorganic compound.

Also, the present disclosure provides a nicotinamide adenine dinucleotide-immobilized carrier that is configured of a carrier which contains carbon and/or an inorganic compound having pores with a size of 2 nm or more to 100 nm or less on the surface, and in which nicotinamide adenine dinucleotide and/or a derivative thereof are immobilized on the carbon and/or the inorganic compound.

The nicotinamide adenine dinucleotide-immobilized carrier can be used in various applications including production of medical products and cosmetics. That is, medical products and cosmetics may be produced using the nicotinamide adenine dinucleotide-immobilized carrier as a bioreactor, and medical products and cosmetics may be produced using the nicotinamide adenine dinucleotide-immobilized carrier itself as a component. Specifically, the nicotinamide adenine dinucleotide-immobilized carrier can be used in, for example, preparation of oral drugs, implant and blood products in vitro and the like. Since there are a large number of oxidoreductases using NAD⁺/NADH as a substrate, with respect to a patient with a deficient oxidoreductase, carbon or an inorganic compound having pores, in which both the enzyme and NADH are retained on the surface while retaining activity, effectively and continually functions. For example, carbon or an inorganic compound having pores, in which both an acetaldehyde dehydrogenation enzyme and NAD⁺ are retained on the surface while retaining activity, can be used in detoxification of alcohol intoxication. In addition, since NAD⁺/NADH are known to be effective for treating Alzheimer's disease, NAD⁺/NADH can be used in treating a patient with Alzheimer's disease.

Also, the present disclosure provides an enzyme reaction utilization device including:
a nicotinamide adenine dinucleotide-immobilized electrode or a nicotinamide adenine dinucleotide-immobilized carrier which contains carbon and/or an inorganic compound having pores with a size of 2 nm or more to 100 nm or less on the surface, and in which nicotinamide adenine dinucleotide and/or a derivative thereof are immobilized on the carbon and/or the inorganic compound.

For example, this enzyme reaction utilization device is a fuel cell (biofuel cell), a biosensor or a bioreactor.

For the nicotinamide adenine dinucleotide-immobilized electrode, the nicotinamide adenine dinucleotide-immobilized carrier and the enzyme reaction utilization device, the descriptions relating to the fuel cell and the method for producing a fuel cell are established unless contrary to the nature thereof. In the nicotinamide adenine dinucleotide-immobilized carrier, a material having pores on the surface may be conductive or nonconductive.

In the nicotinamide adenine dinucleotide-immobilized electrode and the nicotinamide adenine dinucleotide-immobilized carrier, at least one functional group having various charges (positive and/or negative) or reactivity can be given to the carbon and/or the inorganic compound as necessary.

Furthermore, the present disclosure provides a protein-immobilized electrode that is configured of an electrode which includes carbon and/or an inorganic compound having pores with a size of 2 nm or more and 100 nm or less on the surface and in which protein is immobilized on the carbon and/or the inorganic compound.

Also, the present disclosure provides a protein-immobilized carrier that is configured of a carrier which contains carbon and/or an inorganic compound having pores with a size of 2 nm or more and 100 nm or less on the surface and in which protein is immobilized on the carbon and/or the inorganic compound.

The protein-immobilized electrode and the protein-immobilized carrier can be used in various applications. The protein may basically be any type of protein and for example, there are enzymes, antibodies, hormones, albumins, fluorescent proteins (GFP, RFP and the like), keratins, collagens, actins, myosins and the like.

When an enzyme is used as protein, the protein-immobilized electrode and the protein-immobilized carrier respectively becomes an enzyme-immobilized electrode and an enzyme-immobilized carrier. For example, the enzyme-immobilized electrode can be used in a negative electrode of a fuel cell, an electrode of a biosensor and the like. In addition, for example, the enzyme-immobilized carrier can be used in a bioreactor. In these protein-immobilized electrode and the protein-immobilized carrier, from the viewpoint of stronger immobilization of protein, using a compound for protein immobilization having a portion to be bonded to the carbon and/or the inorganic compound and a portion to be bonded to the protein, the protein is preferably bonded to the carbon and/or the inorganic compound via the compound for protein immobilization. The compound for protein immobilization is typically bonded to the carbon and/or the inorganic compound inside the pore on the surface of the carbon and/or the inorganic compound. In this manner, the protein is bonded to the carbon and/or the inorganic compound via the compound for protein immobilization, which is effective for direct electron transfer from the protein to the carbon and/or the inorganic compound.

In addition, the present disclosure provides a peptide-immobilized electrode that is configured of an electrode which includes carbon and/or an inorganic compound having pores with a size of 2 nm or more and 100 nm or less on the surface and in which a peptide is immobilized on the carbon and/or the inorganic compound.

Also, the present disclosure provides a peptide-immobilized carrier that is configured of a carrier which contains carbon and/or an inorganic compound having pores with a size of 2 nm or more and 100 nm or less on the surface and in which a peptide is immobilized on the carbon and/or the inorganic compound.

The peptide-immobilized electrode and the peptide-immobilized carrier can be used in various applications. The peptide may basically be any type of peptide. For the peptide-immobilized electrode and the peptide-immobilized carrier, the descriptions relating to the protein-immobilized electrode and the protein-immobilized carrier are established unless contrary to the nature thereof.

For example, the protein-immobilized electrode, the protein-immobilized carrier, the peptide-immobilized electrode and the peptide-immobilized carrier can be applied to various applications as follows.

Chemical and biological features of protein and peptide can be retained and further, a retaining amount can be controlled.

When the protein-immobilized electrode using an enzyme as a protein is used as a biofuel cell or a biosensor, an amount of enzyme used can be decreased and further, stability such as repetition properties can be improved.

Elution of adsorbed substances can be suppressed by immobilizing protein on carbon and/or an inorganic compound containing the adsorbed substances in the nanopore in advance, and thus, for example, in a biofuel cell, the amount of electron mediator or coenzyme (NADH and the like) used as the adsorbed substances can be decreased.

Even when cross-linkage with expensive poly-L-lysine and the like is not performed, strong immobilization of protein can be made at lower cost. Moreover, a detergent such as a liquid or gas which interacts with protein can be stably and easily realized by retaining the protein which causes a specific interaction with specific substances such as antibodies (antigens and the like) in the nanopore of carbon and/or an inorganic compound. Furthermore, for example, in a pyrene derivative, specific substances can be removed from a solution or the atmosphere by bonding a functional group or reactive group to pyrene.

Carbon and/or an inorganic compound in which a pyrene derivative which retains activated substances causing a bonding reaction with protein such as NHS ester or the like is adsorbed in the nanopore can be used as a protein remover removing protein from a solution and the like.

Medical and hygienic diagnosis and test devices can be stably and easily realized by retaining the protein which causes a specific interaction with specific substances such as antibodies (antigens and the like) in the nanopore of carbon and/or an inorganic compound.

For example, a ligand which is an antigen is bonded and retained to an immobilized antibody and the like to be used in sensing of ELISA (enzyme-linked immunosorbent assay) and the like.

Particles of an antigen-presenting carbon and/or inorganic compound can be obtained by bonding and retaining a ligand which is an antigen to a major histocompatibility complex (MHC) and can be used as a vaccine by introducing the particles into a mucous membrane and below the skin through a mouth, nose, injection and the like.

Activity can be controlled through stable immobilization and retaining amount adjustment on the surface by applying an insoluble protein product.

The protein which causes a specific interaction with specific substances such as antibodies is retained in the nanopore, and thus, a stable and reusable reactor or heterogeneous catalyst using the resultant as a carrier can be realized.

Carbon and/or an inorganic compound having nanopores to which various functional groups are given in high density can be formed by adsorbing a pyrene derivative retaining these functional groups or the like in the nanopore. Accordingly, for example, the positively or negatively charged particles of the carbon/inorganic compound having nanopores can be easily formed to be used in an ink for electronic paper.

As described above, in the present disclosure, nicotinamide adenine dinucleotide or a derivative thereof is strongly immobilized in the pores of the carbon or the inorganic compound having pores with a size of 2 nm or more and 100 nm or less on the surface by adsorption. In addition, an enzyme can be immobilized in the pore as well as nicotinamide adenine dinucleotide or the derivative thereof, and particularly, the enzyme can be strongly immobilized by the immobilization of the enzyme via the compound for enzyme immobilization having a portion to be bonded to the carbon and/or the inorganic compound and a portion to be bonded to the enzyme. Therefore, elution of nicotinamide adenine dinucleotide or the derivative thereof or the enzyme from the electrode and the carrier is prevented. Moreover, in this case, nicotinamide adenine dinucleotide or the derivative thereof, or the enzyme is immobilized in the pores of the carbon and/or the inorganic compound while high reactivity with an enzyme and the like is retained.

Also, in the present disclosure, protein or peptide is strongly immobilized in the pores of the carbon and/or the inorganic compound having pores with a size of 2 nm or more and 100 nm or less on the surface by adsorption. Therefore, elution of protein or peptide from the electrode and the carrier is prevented. In addition, in this case, protein or peptide is immobilized in the pores of the carbon or the inorganic compound while high activity is retained.

### Advantageous Effects of Invention

According to the present disclosure, it is possible to obtain a fuel cell capable of effectively preventing elution of nicotinamide adenine dinucleotide or the derivative thereof being immobilized on the electrode and preventing performance degradation due to elution. Then, a high-performance electronic apparatus and the like can be realized by using this excellent fuel cell.

In addition, it is possible to obtain a nicotinamide adenine dinucleotide-immobilized electrode and a nicotinamide adenine dinucleotide-immobilized carrier capable of effectively preventing elution of nicotinamide adenine dinucleotide or a derivative thereof from the electrode and the carrier. Then, an excellent enzyme reaction utilization device can be obtained by using these nicotinamide adenine dinucleotide-immobilized electrode and nicotinamide adenine dinucleotide-immobilized carrier.

Also, it is possible to obtain a protein-immobilized electrode and a protein-immobilized carrier or a peptide-immobilized electrode and a peptide-immobilized carrier capable of effectively preventing elution of protein or peptide from the electrode and the carrier.

### Brief Description of Drawings

Fig. 1 is a schematic diagram showing a nicotinamide adenine dinucleotide-immobilized electrode according to a first embodiment.
Fig. 2A is a schematic diagram showing a specific example of carbon having nanopores in the nicotinamide adenine dinucleotide-immobilized electrode according to the first embodiment. Fig. 2B is a schematic diagram showing a specific example of carbon having nanopores in the nicotinamide adenine dinucleotide-immobilized electrode according to the first embodiment. Fig. 2C is a schematic diagram showing a specific example of carbon having nanopores in the nicotinamide adenine dinucleotide-immobilized electrode according to the first embodiment.
Fig. 3 is a schematic diagram showing the cross-sectional shape of nanopores present on the surface of a carbon particle when the carbon having nanopores is used as a carbon particle in the nicotinamide adenine dinucleotide-immobilized electrode according to the first embodiment.
Fig. 4 is a schematic diagram showing a distribution state of fibrous carbon and carbon particle in a case of using fibrous carbon as an electrode material of the nicotinamide adenine dinucleotide-immobilized electrode according to the first embodiment.
Fig. 5 is a schematic diagram showing a distribution state of foam metal and carbon particle in a case of using foam metal as an electrode material of the nicotinamide adenine dinucleotide-immobilized electrode according to the first embodiment.
Fig. 6 is a schematic diagram showing the multi-layered nicotinamide adenine dinucleotide-immobilized electrode according to the first embodiment.
Fig. 7 is a schematic diagram showing a result of potentiostatic measurement using the multi-layered nicotinamide adenine dinucleotide-immobilized electrode in Fig. 6.
Fig. 8 is a schematic diagram showing a result of measuring an elution rate of nicotinamide adenine dinucleotide using the multi-layered nicotinamide adenine dinucleotide-immobilized electrode in Fig. 6.
Fig. 9 is a schematic diagram showing a result of measuring cyclic voltammetry using the multi-layered nicotinamide adenine dinucleotide-immobilized electrode in Fig. 6.
Fig. 10 is a schematic diagram showing a result of measuring cyclic voltammetry using the multi-layered nicotinamide adenine dinucleotide-immobilized electrode in Fig. 6.
Fig. 11 is a schematic diagram showing a result of measuring cyclic voltammetry using the multi-layered nicotinamide adenine dinucleotide-immobilized electrode in Fig. 6.
Fig. 12 is a schematic diagram showing a result of potentiostatic measurement using the multi-layered nicotinamide adenine dinucleotide-immobilized electrode in Fig. 6 in which various carbons are used.
Fig. 13 is a schematic diagram showing a result of galvanostatic measurement using the multi-layered nicotinamide adenine dinucleotide-immobilized electrode in Fig. 6 in which various carbons are used.
Fig. 14 is a schematic diagram showing a result of galvanostatic measurement using the multi-layered nicotinamide adenine dinucleotide-immobilized electrode in Fig. 6 in which various carbons are used.
Fig. 15A is a photograph substitute for diagram showing a scanning electron microscope image of a layer in which natural graphite is provided in a carbon electrode formed of fibrous carbon. Fig. 15B is a photograph substitute for diagram showing a scanning electron microscope image of a layer in which biocarbon is provided in a carbon electrode formed of fibrous carbon. Fig. 15C is a photograph substitute for diagram showing a scanning electron microscope image of a layer in which ketjen black is provided in a carbon electrode formed of fibrous carbon.
Fig. 16A is a photograph substitute for diagram showing a scanning electron microscope image of a layer in which natural graphite is provided in a carbon electrode formed of fibrous carbon. Fig. 16B is a photograph substitute for diagram showing a scanning electron microscope image of a layer in which biocarbon is provided in a carbon electrode formed of fibrous carbon. Fig. 16C is a photograph substitute for diagram showing a scanning electron microscope image of a layer in which ketjen black is provided in a carbon electrode formed of fibrous carbon.
Fig. 17 is a schematic diagram showing a result of measuring pore distribution of biocarbon and ketjen black.
Fig. 18 is a schematic diagram showing a result of measuring pore distribution of various carbons.
Fig. 19 is a schematic diagram showing a result of measuring cyclic voltammetry using the multi-layered nicotinamide adenine dinucleotide-immobilized electrode in Fig. 6 in which various carbons are used.
Fig. 20 is a schematic diagram showing a biofuel cell according to a second embodiment.
Fig. 21 is a schematic diagram showing a detailed configuration of a negative electrode of the biofuel cell according to the second embodiment, an example of an enzyme group and a coenzyme enclosed in liposome immobilized on the negative electrode and an electron transfer reaction of the enzyme group and the coenzyme.
Fig. 22A is a schematic diagram showing a specific configuration example of the biofuel cell according to the second embodiment. Fig. 22B is a schematic diagram showing a specific configuration example of the biofuel cell according to the second embodiment.
Fig. 23 is a schematic diagram showing a bioreactor according to a third embodiment.
Fig. 24 is a schematic diagram showing an enzyme/nicotinamide adenine dinucleotide-immobilized electrode according to a fourth embodiment.
Fig. 25 is a schematic diagram showing a specific example of the enzyme/nicotinamide adenine dinucleotide-immobilized electrode according to the fourth embodiment.
Fig. 26 is a schematic diagram showing a result of galvanostatic measurement using an enzyme/nicotinamide adenine dinucleotide-immobilized electrode in Example 5.
Fig. 27A is a schematic diagram showing a result of measuring an enzyme elution rate using the enzyme/nicotinamide adenine dinucleotide-immobilized electrode in Example 5. Fig. 27B is a schematic diagram showing a result of measuring an enzyme elution rate using the enzyme/nicotinamide adenine dinucleotide-immobilized electrode in Example 5.
Fig. 28 is a schematic diagram showing a result of galvanostatic measurement by changing an amount of nicotinamide adenine dinucleotide immobilized in the enzyme/nicotinamide adenine dinucleotide-immobilized electrode in Example 5.
Fig. 29 is a schematic diagram showing a result of measuring pore distribution in a case where NHS pyrene is applied on the surface of biocarbon and in a case where NHS pyrene is not applied on the surface of biocarbon.
Fig. 30 is a schematic diagram showing an enzyme/nicotinamide adenine dinucleotide-immobilized electrode in which an enzyme is immobilized in the nanopore of biocarbon through NHS pyrene.
Fig. 31 is a schematic diagram showing a comparison of enzyme immobilization capacity of enzyme/nicotinamide adenine dinucleotide-immobilized electrodes using five types of compounds as a compound for enzyme immobilization.
Fig. 32 is a schematic diagram showing a comparison of results of potentiostatic measurement using the enzyme/nicotinamide adenine dinucleotide-immobilized electrodes using five types of compounds as a compound for enzyme immobilization.
Fig. 33 is a schematic diagram showing a comparison of results of measuring an enzyme elution rate from the enzyme/nicotinamide adenine dinucleotide-immobilized electrodes using five types of compounds as a compound for enzyme immobilization.
Fig. 34 is a schematic diagram showing a comparison of results of potentiostatic measurement using the enzyme/nicotinamide adenine dinucleotide-immobilized electrodes using five types of compounds as a compound for enzyme immobilization.
Fig. 35 is a schematic diagram to describe a substance remover according to a fifth embodiment.
Fig. 36 is a schematic diagram showing a carbon particle used in the substance remover according to the fifth embodiment.
Fig. 37 is a schematic diagram to describe an antigen remover according to a seventh embodiment.
Fig. 38 is a schematic diagram showing a carbon sheet used in the antigen remover according to the seventh embodiment.
Fig. 39 is a schematic diagram to describe a vaccine according to an eighth embodiment.
Fig. 40 is a schematic diagram showing a carbon particle used in the vaccine according to the eighth embodiment.
Fig. 41 is a schematic diagram showing a bioreactor according to a ninth embodiment.

### Description of Embodiments

Hereinafter, modes for carrying out the invention (hereinafter referred to as "embodiments") are described below. In addition, description is made in the following order.
1. First embodiment (nicotinamide adenine dinucleotide-immobilized electrode and production method therefor)
2. Second embodiment (biofuel cell)
3. Third embodiment (bioreactor)
4. Fourth embodiment (enzyme/nicotinamide adenine dinucleotide-immobilized electrode and production method therefor)
5. Fifth embodiment (substance remover)
6. Sixth embodiment (protein remover)
7. Seventh embodiment (antigen remover)
8. Eighth embodiment (vaccine)
9. Ninth embodiment (bioreactor)

### <1. First Embodiment>

### [Nicotinamide Adenine Dinucleotide-Immobilized Electrode]

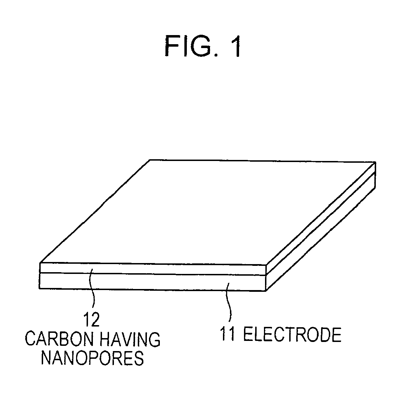

Fig. 1 shows a nicotinamide adenine dinucleotide-immobilized electrode according to a first embodiment.

As shown in Fig. 1, in the nicotinamide adenine dinucleotide-immobilized electrode, carbon 12 having nanometer-size pores, specifically, pores with a size of 2 nm or more and 100 nm and less, preferably 2 nm or more and 30 nm or less, and more preferably 4 nm or more and 20 nm or less, or pores with a size of 0.5 nm or more and less than 2 nm (hereafter, these pores are referred to as "nanopores") is formed on the surface of an electrode 11. In Fig. 1, while the carbon 12 having nanopores is shown in the form of being provided in layers on the electrode 11, in the case where the electrode 11 is formed of fibrous carbon and the like and has a structure with a space as a porous body, the carbon may be formed inside the electrode 11 in a dispersed manner. In the nanopores of the carbon 12 having nanopores, one molecule or two or more molecules of nicotinamide adenine dinucleotide and/or a derivative thereof are adsorbed and immobilized. Also, the nicotinamide adenine dinucleotide-immobilized electrode may be configured only with the carbon 12 in which nicotinamide adenine dinucleotide and/or a derivative thereof are immobilized without using the electrode 11.

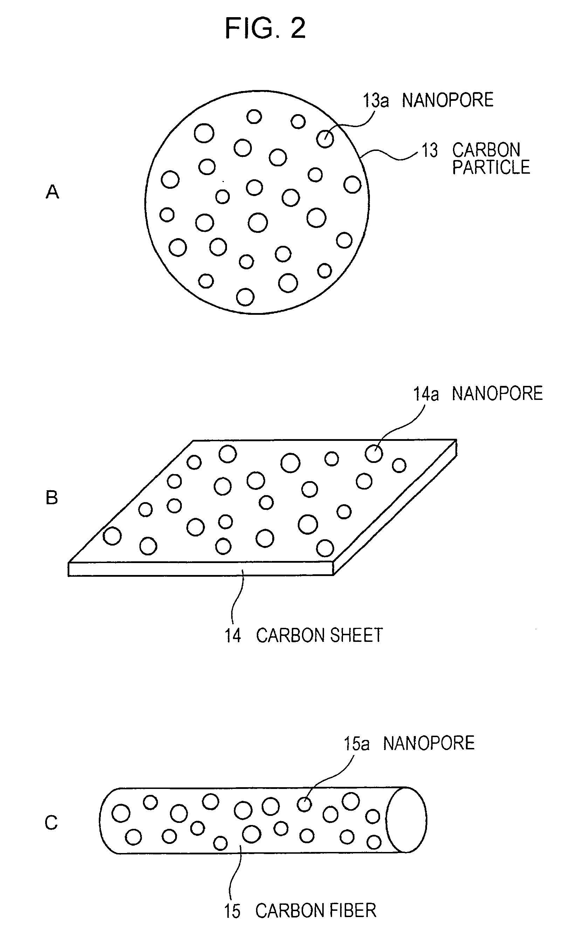

For example, the carbon 12 having nanopores is formed of one or two types of carbon particles, a carbon sheet, a carbon fiber and the like. Figs. 2A, B and C respectively show a carbon particle, a carbon sheet and a carbon fiber.

As shown in Fig. 2A, a carbon particle 13 has plural nanopores 13a on the surface. While the carbon particle 13 has a spherical shape in Fig. 2A, regardless of the shape of the carbon particle 13, any shape of an ellipsoidal shape, a cubic shape, a rectangular parallelepiped shape and the like may be employed. In addition, two types or more of carbon particles 13 having different shapes may be mixed. While the size of the carbon particle 13 is not particularly limited, for example, the size is 10 nm or more and 1 nm or less and typically, 100 nm or more and 500 µm or less.

As shown in Fig. 2B, a carbon sheet 14 has plural nanopores 14a on the surface. While the carbon sheet 14 has a plate-like shape in Fig. 2B, the entire carbon sheet 14 or a part of the carbon sheet may be curved. Regardless of the shape of the carbon sheet 14, any shape of a square shape, a rectangular shape, a circular shape, an ellipsoidal shape, a triangular shape, a hexagonal shape and the like may be employed. The thickness of the carbon sheet 14 is not particularly limited, but, for example, the thickness is 10 nm or more and 1 nm or less and typically, 100 nm or more and 500 µm or less.

As shown in Fig. 2C, a carbon fiber 15 has plural nanopores 15a on the surface. While the carbon fiber 15 has a circular cross-sectional shape in Fig. 2B, regardless of the cross-sectional shape of the carbon fiber 15, any shape of a circular shape, an ellipsoidal shape, a square shape, a rectangular shape and the like may be employed. In addition, two types or more of carbon fibers 15 having different cross-sectional shapes may be mixed. While the thickness (size) of the carbon fiber 15 is not particularly limited, for example, the size is 10 nm or more and 1 nm or less and typically, 100 nm or more and 500 µm or less.

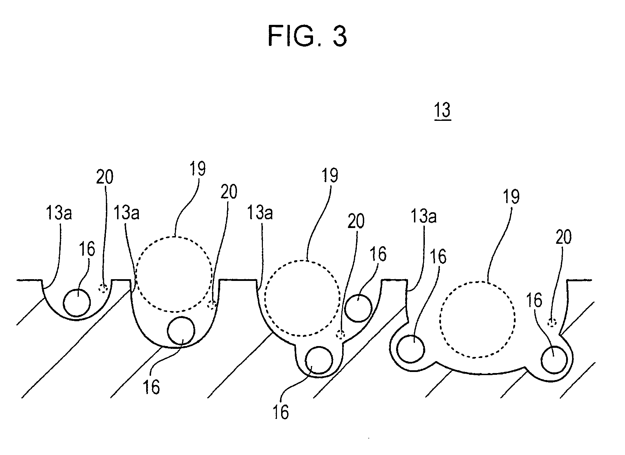

Fig. 3 is a schematic diagram showing the cross-sectional shape of the nanopores 13a on the surface of the carbon particle 13 as an example of the carbon 12 having nanopores. As shown in Fig. 3, the nanopores 13a having different cross-sectional shapes, pore sizes, depth and the like with each other may be present. Moreover, a smaller nanopore may be present inside the nanopore 13a. One molecule or two or more molecules of nicotinamide adenine dinucleotide and a derivative thereof 16 or more are adsorbed and immobilized on the inner wall of the nanopore 13a.

As described above, for example, the carbon 12 having nanopores contains at least one selected from the group consisting of activated carbon, carbon black and biocarbon, but other carbons may be used.

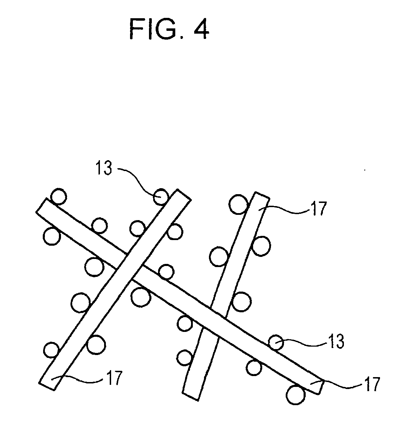

For example, the material of the electrode 11 is selected from the above-described materials as necessary. An example of the nicotinamide adenine dinucleotide-immobilized electrode when fibrous carbon is used as the material of the electrode 11 is shown in Fig. 4. As shown in Fig. 4, the carbon particles 13 having nanopores 13a are present in a dispersed manner in the space among each pieces of fibrous carbon 17 in an aggregate of fibrous carbon 17.

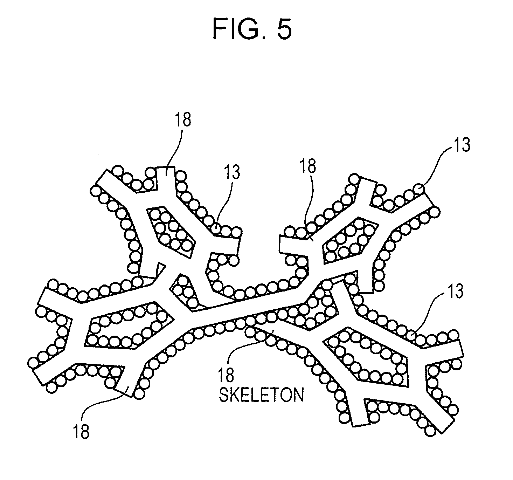

As the material of the electrode 11, foam metal, for example, foam nickel may be used. An example of the nicotinamide adenine dinucleotide-immobilized electrode when foam metal is used as the material of the electrode 11 is shown in Fig. 5. As shown in Fig. 5, the carbon particles 13 are present in a dispersed manner as carbon having nanopores which is immobilized on a skeleton 18 formed of a porous material having a three-dimensional net-like structure. The surface of the skeleton 18 may be covered with a carbon-based material. Regardless of the shape of the carbon-based material which covers the surface of the skeleton 18, any shape of a fibrous shape (needle-like shape), a granular shape and the like may be employed. The porosity of foam metal or foam metal which is covered with a carbon-based material is generally 85% or more or 90% or more, and the pore size thereof is generally, for example, 10 nm to 1 mm, 10 nm to 600 µm, or 1 to 600 µm, typically, 50 to 300 µm, and more typically, 100 to 250 µm. As the carbon-based material, for example, a high conductive material such as ketjen black is preferable but a functional carbon-based material such as a carbon nanotube and fullerene may be used. The porosity of the porous conductive material is generally 80% or more or 90% or more, and the pore size is generally, for example, 9 nm to 1 mm, 9 nm to 600 µm or 1 to 600 µm, typically 30 to 400 µm and more typically, 80 to 230 µm.

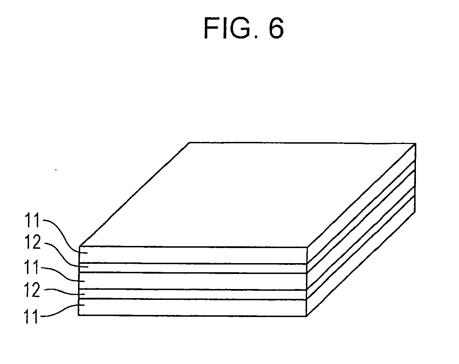

As shown in Fig. 6, the nicotinamide adenine dinucleotide-immobilized electrode may be configured with a laminate in which the electrode 11 and the carbon 12 having nanopores are laminated alternately. One molecule or two or more molecules of nicotinamide adenine dinucleotide and/or the derivative thereof are immobilized on each carbon 12 having nanopores. Since the nicotinamide adenine dinucleotide-immobilized electrode is configured with a laminate in which the electrode 11 and the carbon 12 having nanopores are laminated alternately in this manner, the carbon 12 having nanopores in which the nicotinamide adenine dinucleotide and/or the derivative thereof are immobilized is interposed between the electrodes 11 so that the nicotinamide adenine dinucleotide and/or the derivative thereof can be effectively prevented from being eluted to the outside.

On the nicotinamide adenine dinucleotide-immobilized electrode, one or plural types of enzymes using the nicotinamide adenine dinucleotide and/or the derivative thereof as a coenzyme or further, electron mediators may immobilized. By doing this, an enzyme/nicotinamide adenine dinucleotide-immobilized electrode or an enzyme/nicotinamide adenine dinucleotide/electron mediator-immobilized electrode can be obtained. For example, when glucose is used as a substrate, NAD⁺/NAD-dependent glucose dehydrogenase and diaphorase are used as the enzyme and, for example, a compound having a quinine skeleton is used as the electron mediator.

The immobilization of the enzyme and the electron mediator on the nicotinamide adenine dinucleotide-immobilized electrode is described. As an example, it can be considered the case where the carbon particle 13 shown in Fig. 3 is used as the carbon 12 having nanopores. In Fig. 3, while an enzyme 19 can be adsorbed and immobilized on the surface of the carbon particle 13, it can be considered that the enzyme 19 enters the nanopore 13a larger than the enzyme and strongly adsorbed to be strongly immobilized on the carbon particle 13. In Fig. 3, only one enzyme 19 is represented but two or more enzymes having one or two or more types may be immobilized. Furthermore, it can be considered that the electron mediator 20 enters the nanopore 13a and immobilized. In this manner, when the enzyme 19 and the electron mediator 20 are immobilized in the nanopore 13a, the nicotinamide adenine dinucleotide and/or the derivative thereof 16 similarly immobilized in the nanopore 13a come close to the enzyme 19 and thus, an enzyme reaction using the nicotinamide adenine dinucleotide and/or the derivative thereof 16 as a coenzyme effectively and rapidly occurs. When the electron mediator 20 is also immobilized in the nanopore 13a, the electron mediator 20 comes close to the enzyme 19, and thus, an electron transfer reaction from the enzyme 19 to the electron mediator 20 and an electron transfer reaction from the electron mediator 20 to the carbon particle 13 also effectively and rapidly occur. Specifically, when all of nicotinamide adenine dinucleotide and/or the derivative thereof 16, NAD⁺/NAD-dependent glucose dehydrogenase and diaphorase as the enzyme 19 and the electron mediator having a quinine skeleton are immobilized in the nanopore 13a, all enzyme reactions using glucose as a fuel or a substrate very effectively and rapidly occur.

As necessary, in order to achieve strong immobilization of nicotinamide adenine dinucleotide and/or the derivative thereof, the enzyme and the like, a immobilizing material may be formed so as to cover the carbon 12 having nanopores. As the immobilizing material, known materials can be used and selected as necessary. Specifically, for example, as the immobilizing material, a combination of glutaraldehyde (GA) and poly-L-lysine (PLL) and polyion complexes formed by using a polycation such as poly-L-lysine (PLL) or a salt thereof and a polyanion such as polyacrylic acid (for example, sodium polyacrylate (PAAcNa)) or a salt thereof can be used.

### [Method for Producing Nicotinamide Adenine Dinucleotide-Immobilized Electrode]

The nicotinamide adenine dinucleotide-immobilized electrode can be produced, for example, as follows. As an example, the case where the carbon particle 13 is used as the carbon 12 having nanopores is described.

First, a dispersion in which in which carbon particles are mixed with a water-soluble polymer and dispersed in water is prepared. The dispersion is applied on the electrode 11 and dried to immobilize the carbon particles 13 on the electrode 11. As the water soluble polymer, for example, polyacrylic acid, polylysine, polyethylenimine, polyaniline 2-sulfonic acid, polyethylene glycol and the like are used. Alternatively, a dispersion in which a non-water soluble polymer and the carbon particles 13 are dispersed in an organic solvent is prepared, and the dispersion may be applied on the electrode 11 and dried to immobilize the carbon particles 13 on the electrode 11. As the non-water soluble polymer, for example, polymers containing fluorine atoms such as polyaniline, polypyrrole, polythiophene, polytetra fluoroethylen (PTFE), polyvinylidene fluoride (PVDF) and polyvinyl fluoride (PVF) and copolymers thereof and polymers of copolymers of these monomers and ethylene and styrene can be used. A dispersion may be prepared only by using carbon particles without mixing with a polymer.

Next, a solution in which the nicotinamide adenine dinucleotide and/or the derivative thereof 16 is contained in a buffer solution is prepared and the solution is applied on the electrode 11 in which the carbon particle 13 having nanopores are immobilized and dried. Thus, the nicotinamide adenine dinucleotide and/or the derivative thereof 16 are adsorbed and immobilized in the nanopore 13a of the carbon particle 13. The nicotinamide adenine dinucleotide and/or the derivative 16 are adsorbed onto the carbon particle 13 in this manner, and then, for example, the solution is preferably completely dried at a room temperature or a temperature of about 40°C. When the enzyme/nicotinamide adenine dinucleotide-immobilized electrode or the enzyme/nicotinamide adenine dinucleotide/electron mediator-immobilized electrode is formed, similarly, the enzyme 19 or further the electron mediator 20 is immobilized on the electrode 11. At this time, since there is a possibility that a pore smaller than a large molecule can be blocked by the large molecule such as the enzyme 19, it is preferable that a molecule having a small molecular weight be first applied. Specifically, since the molecular weight is generally increased in the order of the electron mediator 20, the nicotinamide adenine dinucleotide or the derivative thereof 16 and the enzyme 19, it is preferable to apply, first, the electron mediator 20, next, the nicotinamide adenine dinucleotide or the derivative thereof 16, and finally, the enzyme 19. Then, after the application of the enzyme, the carbon particle may be bonded by adding a polymer or the carbon particle may be more strongly immobilized by forming a polymer film on the surface.

### <Example 1>

A nicotinamide adenine dinucleotide-immobilized electrode was produced as follows. As the electrode 11, a carbon electrode formed of fibrous carbon was used.

A dispersion in which carbon particles are mixed with a water-soluble polymer and dispersed in water was prepared. The dispersion was applied on the carbon electrode and dried to immobilize the carbon particles on the carbon electrode.

As the carbon particle, biocarbon was used. The biocarbon was produced in the same manner as in Example 1 of PTL 16. Specifically, first, crushed husks (husk of rice Ishikari, product of Kagoshima Prefecture) were heated at 500°C for 5 hours under a stream of nitrogen to carbonize obtaining carbides. After crushing 10 g of the carbide were placed in a crucible made from alumina and heated under a stream of nitrogen (10 L/min) at a temperature elevation rate of 5°C/min to 1000°C. Then, the carbides were carbonized at 1000°C for 5 hours to be changed to a carbonaceous substance (precursor for porous carbon materials) and cooled to room temperature. During the carbonization and cooling, nitrogen gas continued to flowing. Next, the precursor for porous carbon materials was immersed overnight in a 46% by volume aqueous solution of hydrofluoric acid for acid treatment and then washed with water and ethyl alcohol until pH of the solution became 7. At the end, the carbides were dried to obtain porous carbon materials, that is, biocarbon.

10 to 50 mg of NADH (manufactured by Sigma-Aldrich Corporation, N-8129) was weighed, and the resultant was dissolved in 1 ml of the buffer solution (10 mM of phosphate buffer solution, ph 7) to prepare a NADH buffer solution. The NADH buffer solution was prepared as described above, applied on the carbon electrode on which the carbon particles were immobilized and dried at a room temperature.

A multi-layered nicotinamide adenine dinucleotide-immobilized electrode having the structure shown in Fig. 6 was produced by repeating the above-described process.

### <Example 2>

In Example 2, a nicotinamide adenine dinucleotide-immobilized electrode was produced as in Example 1 except that ketjen black (KB) was used as a carbon particle.

### <Example 3>

In Example 3, a nicotinamide adenine dinucleotide-immobilized electrode was produced as in Example 1 except that activated carbon (activated carbon 1) activated with zinc chloride was used as a carbon particle.

### <Example 4>

In Example 4, a nicotinamide adenine dinucleotide-immobilized electrode was produced as in Example 1 except that activated carbon (activated carbon 2) activated with steam was used as a carbon particle.

### <Comparative Example 1>

In Comparative Example 1 (Ctrl), a nicotinamide adenine dinucleotide-immobilized electrode was produced as in Example 1 except that fibrous carbon was used as a carbon particle.

### <Comparative Example 2>

In Comparative Example 2, a nicotinamide adenine dinucleotide-immobilized electrode was produced as in Example 1 except that a mesocarbon microbead (MCMB) was used as a carbon particle.

### <Comparative Example 3>

In Comparative Example 3, a nicotinamide adenine dinucleotide-immobilized electrode was produced as in Example 1 except that a glassy carbon (GC) particle was used as a carbon particle.

### <Test Results>

Using glucose as a fuel, a fuel solution in which glucose is dissolved in 10 mM of a phosphate buffer solution (pH7) was prepared. In the fuel solution, as an enzyme NAD⁺/NADH-dependent glucose dehydrogenase (GDH) (EC 1.1.1.47, manufactured by Amano Enzyme Inc.) and diaphorase (DI) (EC 1.8.1.4, manufactured by Amano Enzyme Inc.), and AQ2S (anthraquinone-2-sulfonic acid) which is a quinone derivative as an electron mediator were dissolved.

Using the nicotinamide adenine dinucleotide-immobilized electrodes of Examples 1 and 2 and Comparative Example 1, repetition properties were verified by electrochemical observation of catalytic current using the enzyme. For this purpose, the nicotinamide adenine dinucleotide-immobilized electrodes of Examples 1 and 2 and Comparative Example 1 were used as a working electrode, Ag|AgCl was used as a reference electrode, and a platinum wire was used as a counter electrode in an electrochemical measuring apparatus. After the addition of the fuel solution, pipetting was performed to measure a current value at a constant voltage of -0.2 V, then, washing with ultrapure water was performed by pipetting of twenty times or more, and washing was similarly performed again with replaced ultrapure water. After washing, the fuel solution was added again, and a potentiostatic measurement was performed similarly after pipetting. By repeating a series of these operations, the nicotinamide adenine dinucleotide immobilization performance of the nicotinamide adenine dinucleotide-immobilized electrode was verified.

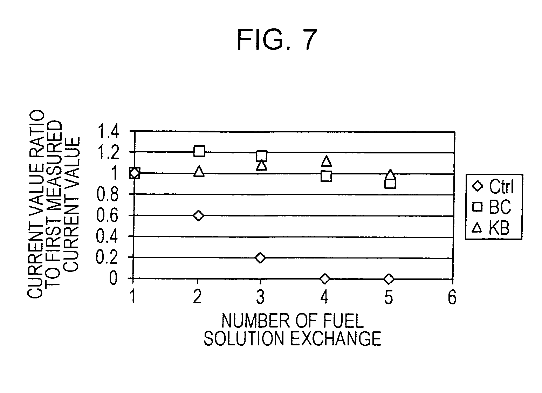

The result thereof is shown in Fig. 7. In Fig. 7, the ratio of the measured current value to the first measurement after 5 minutes from the start of the measurement is shown. As shown in Fig. 7, when biocarbon (BC) or ketjen black (KB) is used as a carbon particle, even when the fuel solution exchange including washing with ultrapure water is performed, the current value is changed only about 10% and a remarkable decrease in the current value is not observed. Contrarily, when fibrous carbon is used as a carbon particle, and accordingly, when the carbon electrode and the carbon particle are formed of fibrous carbon, a remarkable decrease in the current value enough to cut the current value by half due to fuel solution exchange is shown every time. This is because, while in the biocarbon (BC) or ketjen black (KB), nicotinamide adenine dinucleotide is immobilized in the nanopore of the surfaces thereof to prevent elution, nicotinamide adenine dinucleotide is easily eluted by fuel solution exchange in the case where the fibrous carbon not having nanopores on the surface is used.

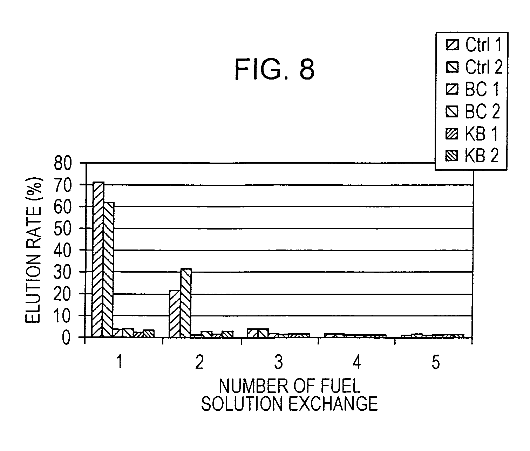

In the same test as the above-described description, a result of measuring an elution amount of nicotinamide adenine dinucleotide in the fuel solution every time by high-performance liquid chromatography (HPLC) is shown in Fig. 8. When biocarbon (BC) or ketjen black (KB) which is a carbon particle having nanopores was used, it was confirmed that nicotinamide adenine dinucleotide is strongly adsorbed onto the carbon particle, and elution is rarely shown in Fig. 8.

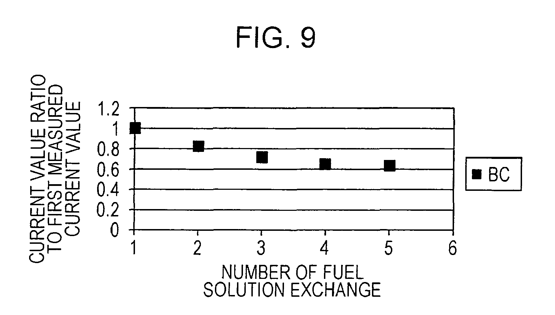

Only NAD⁺/NADH-dependent glucose dehydrogenase and diaphorase (DI) are immobilized as enzymes on the electrode with biocarbon (BC) provided as a carbon particle on the carbon electrode formed of fibrous carbon, the fuel solution containing nicotinamide adenine dinucleotide and the electron mediator was repeatedly exchanged as well as glucose to measure cyclic voltammetry (CV). The result thereof is shown in Fig. 9. In Fig. 9, while the current value was initially decreased by the fuel solution exchange, subsequently, a constant current value was shown. From the result, it was confirmed that the enzyme is also strongly adsorbed onto the biocarbon (BC) having nanopores in a reactable state.

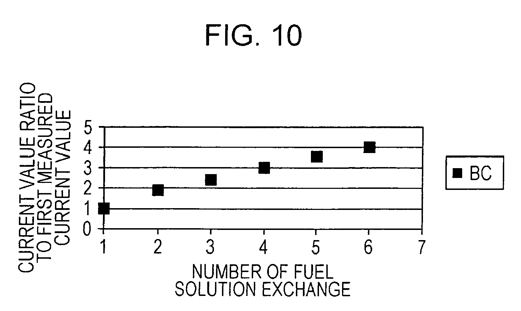

Using the electrode with biocarbon (BC) provided on the carbon electrode formed of fibrous carbon as a carbon particle, the fuel solution containing NAD⁺/NADH-dependent glucose dehydrogenase and diaphorase (DI), and nicotinamide adenine dinucleotide and the electron mediator as enzymes was repeatedly exchanged as well as glucose to measure CV. The result thereof is shown in Fig. 10. From Fig. 10, since the peak current value of the electron mediator was increased every time the fuel solution was exchanged, it was confirmed that the electron mediator contained in the fuel solution every time is strongly retained on the biocarbon (BC) having nanopores in a reactable state.

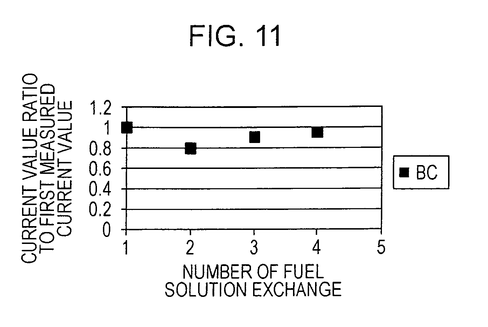

The electron mediator was immobilized on the electrode with biocarbon (BC) provided on the carbon electrode formed of fibrous carbon as a carbon particle, the fuel solution containing NAD⁺/NADH-dependent glucose dehydrogenase and diaphorase (DI), and nicotinamide adenine dinucleotide as enzymes was repeatedly exchanged as well as glucose to measure CV. The result thereof is shown in Fig. 11. In Fig. 11, it was confirmed that the catalytic current value is retained regardless of fuel solution exchange. That is, it was confirmed that the electron mediator is strongly retained on the biocarbon (BC) having nanopores in a reactable state.

NAD⁺/NADH-dependent glucose dehydrogenase and diaphorase (DI), and nicotinamide adenine dinucleotide and the electron mediator were applied to the electrode with biocarbon (BC), activated carbon 1 or fibrous carbon (Ctrl) provided on the carbon electrode formed of fibrous carbon, and the fuel solution was repeatedly exchanged to perform potentiostatic measurement (-0.35 V) and galvanostatic measurement (1.5 mAcm^{- 2}).

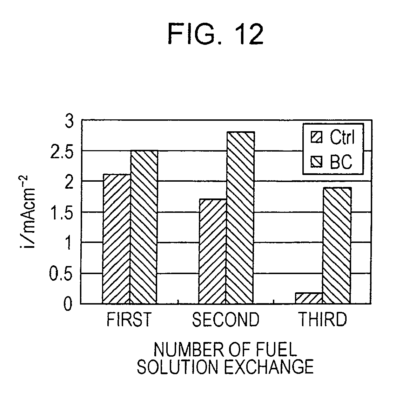

A result of the potentiostatic measurement is shown in Fig. 12. Fig. 12 shows a comparison of the current value (current density i) after one hour from the potentiostatic measurement to the number of fuel solution exchange in the case where biocarbon (BC) or fibrous carbon (Ctrl) is used as a carbon particle. As shown in Fig. 12, when the biocarbon (BC) was used as a carbon particle, even when the fuel solution exchange including washing with ultrapure water was performed, the current value was decreased only about 20%, a remarkable decrease in the current value was not shown. Contrarily, when the fibrous carbon is used as a carbon particle, the current value is rapidly decreased every time the number of fuel solution exchange increases. This is because, while in the biocarbon (BC), nicotinamide adenine dinucleotide is immobilized in the nanopore of the surface thereof to prevent elution, nicotinamide adenine dinucleotide is easily eluted by fuel solution exchange in the case where the fibrous carbon not having nanopores on the surface is used.

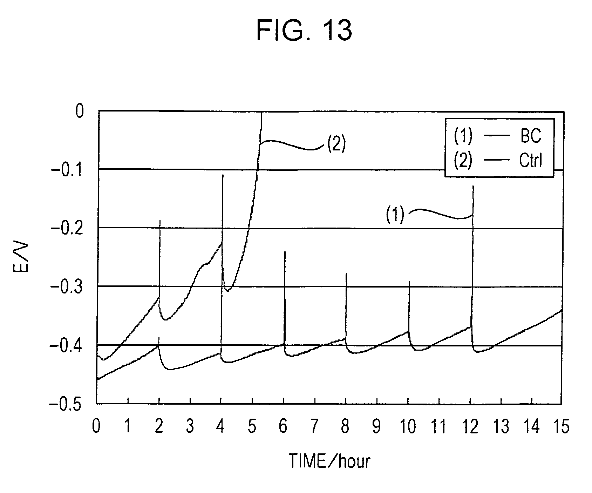

A result of galvanostatic measurement in the case where biocarbon (BC) or fibrous carbon (Ctrl) is used as a carbon particle is shown in Fig. 13. Fig. 13 shows a comparison of changes in the potential E with the passage of time when the fuel solution is exchanged every 2 hours up to 12 hours in the case where the biocarbon (BC) or fibrous carbon (Ctrl) is used as a carbon particle. As shown in Fig. 13, when the biocarbon (BC) is used as a carbon particle, even when the fuel solution exchange including washing with ultrapure water is performed, slight changes in the potential E are shown. Contrarily, when the fibrous carbon (Ctrl) is used as a carbon particle, the fuel solution is exchanged twice and thus, the potential E becomes 0. This is because, while in the biocarbon (BC), nicotinamide adenine dinucleotide is immobilized in the nanopore of the surface thereof to prevent elution, nicotinamide adenine dinucleotide is easily eluted by fuel solution exchange in the case where the fibrous carbon not having nanopores on the surface is used.

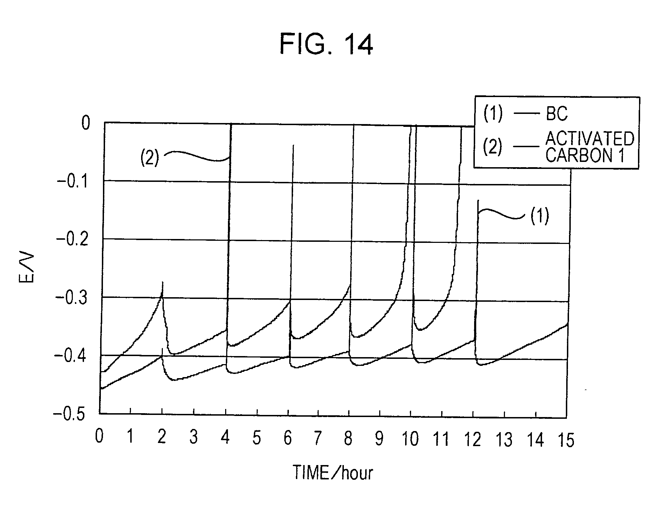

A result of galvanostatic measurement in the case where biocarbon (BC) or activated carbon 1 is used as a carbon particle is shown in Fig. 14. Fig. 14 shows a comparison of changes in the potential E with the passage of time when the fuel solution is exchanged every 2 hours up to 12 hours in the case where the biocarbon (BC) or activated carbon 1 is used as a carbon particle. As shown in Fig. 14, when the biocarbon (BC) and activated carbon 1 are used as carbon particles, even when the fuel solution exchange including washing with ultrapure water is performed, slight changes in the potential E are shown. This is because, in the biocarbon (BC) and activated carbon 1, nicotinamide adenine dinucleotide is immobilized in the nanopore of the surfaces thereof to prevent elution of nicotinamide adenine dinucleotide. In addition, from the Fig. 14, it is understood that elution of nicotinamide adenine dinucleotide is more effectively prevented in the case of using the biocarbon (BC) in comparison with the case of using the activated carbon 1.

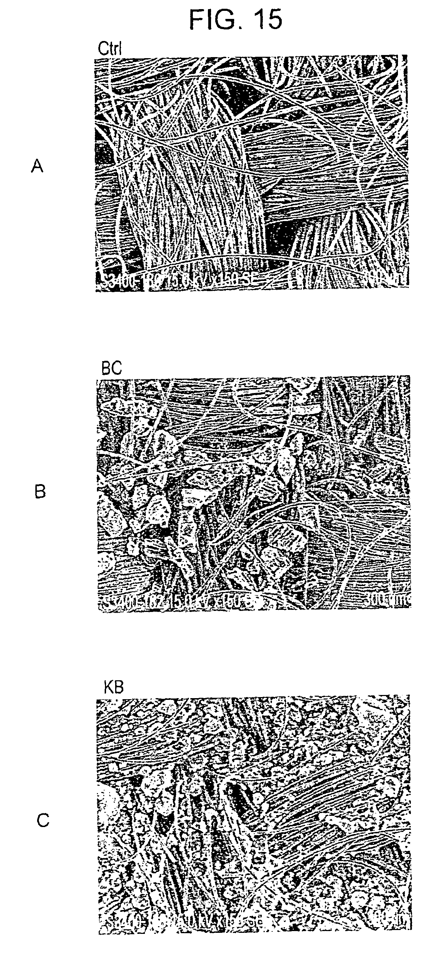

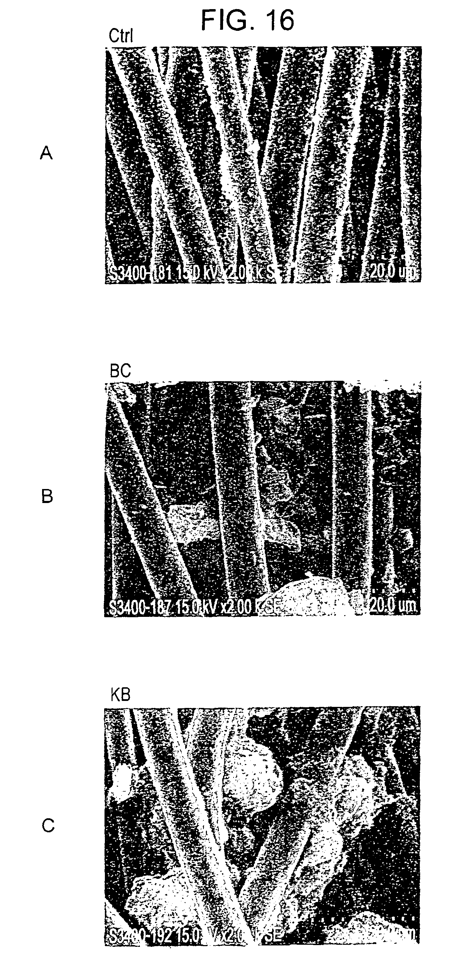

The scanning electron microscope (SEM) images of the layer in which natural graphite (Ctrl), biocarbon (BC) or ketjen black (KB) is immobilized on the carbon electrode formed of fibrous carbon as a carbon particle were observed. The results thereof are shown in Fig. 15A, B and C and Fig. 16A, B and C. Each of Figs. 15A, B and C is an image in which natural graphite (Ctrl), biocarbon (BC) and ketjen black (KB) are immobilized as carbon particles, and Figs. 16A, B and C are magnified photos of Figs. 15A, B and C. In Figs. 15B and C and Figs. 16B and C, the nanopores on the surfaces of biocarbon (BC) and ketjen black (KB) are observed.

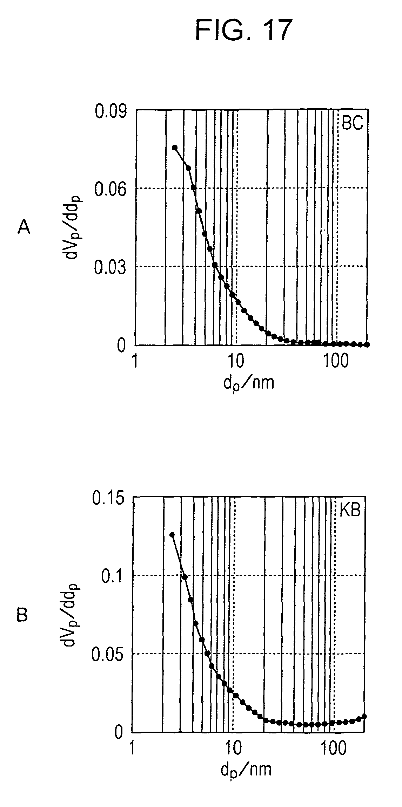

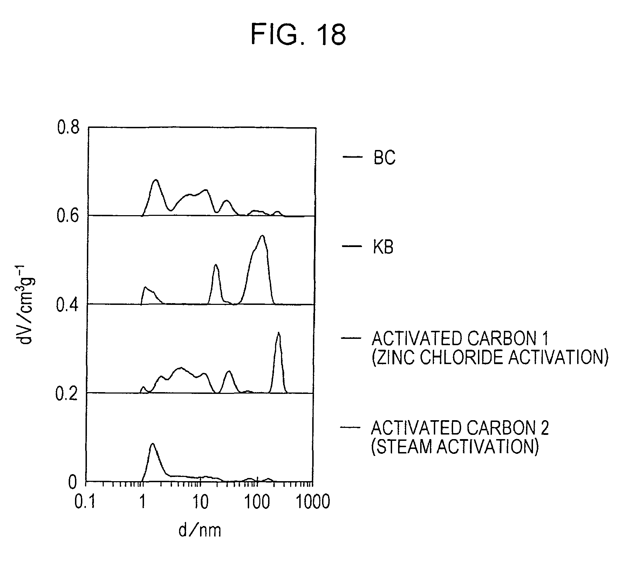

The pore distribution of the layer in which natural graphite (Ctrl), biocarbon (BC), ketjen black (KB), activated carbon 1, activated carbon 2, mesocarbon microbeads (MCMB) and glassy carbon (GC) particles are immobilized on the carbon electrode formed of fibrous carbon as carbon particles was measured. In Figs. 17A and B, the measurement results of pore distribution of biocarbon (BC) and ketjen black (KB) are shown. In addition, the pore distribution of biocarbon (BC), ketjen black (KB), activated carbon 1 and activated carbon 2 measured by the NLDFT/GCMC method is shown in Fig. 18. Since natural graphite (Ctrl), mesocarbon microbeads (MCMB) and glassy carbon (GC) particles have a low-specific surface area (that is, since pores are not present or very little pores are present), the pore distribution could not be measured. In Table 1, the specific surface area and pore volume of biocarbon (BC), ketjen black (KB), activated carbon 1 and activated carbon 2 by the BET method are collectively shown. As shown in Table 1, the BET specific surface area of natural graphite (Ctrl), mesocarbon microbeads (MCMB) and glassy carbon (GC) particles is about from 1 m²/g to 5 m²/g, the BET specific surface area of biocarbon (BC) is 2050 m²/g, the BET specific surface area of ketjen black (KB) is 1170 m²/g, the BET specific surface area of activated carbon 1 (zinc chloride activation) is 1850 m²/g, and the BET specific surface area of activated carbon 2 (steam activation) is 1310 m²/g, and the pore volume of natural graphite (Ctrl), mesocarbon microbeads (MCMB) and glassy carbon (GC) particles is about 0.01 cm³/g, the pore volume of biocarbon (BC) is 1.95 cm³/g,the pore volume of ketjen black (KB) is 2.44 cm³/g, the pore volume of activated carbon 1 is 1.73 cm³/g, and the pore volume of activated carbon 2 is 0.90 cm³/g. From Figs. 17 and 18, it was estimated that micropores of 0.5 nm to 2 nm and mesopores of 2 nm to 20 nm are remarkably present in the biocarbon (BC) while micropores of 0.5 nm to 2 nm and mesopores of nearly 20 nm are present in the ketjen black (KB), and furthermore, pores are also present in a boundary region of mesopores of nearly 100 nm and microholes. While a low number of micropores are present, mesopores of 2 nm to 20 nm are remarkably present in the activated carbon 1. While micropores of 0.5 nm to 2 nm are remarkably present, a low number of mesopores of 4 nm or more are present in the activated carbon 2.

**Table 1 BET specific surface area and pore volume**

| Specific surface area (m²/g) | | Pore volume (cm³/g) |
|---|---|---|
| BC | 2050 | 1.95 |
| KB | 1170 | 2.44 |
| Activated carbon 1 | 1850 | 1.73 |
| Activated carbon 2 | 1310 | 0.90 |

From Table 1, generally, it can be said that a specific surface area of 1500 (m²/g) or more and a pore volume of 1.5 cm³/g or more are preferable.

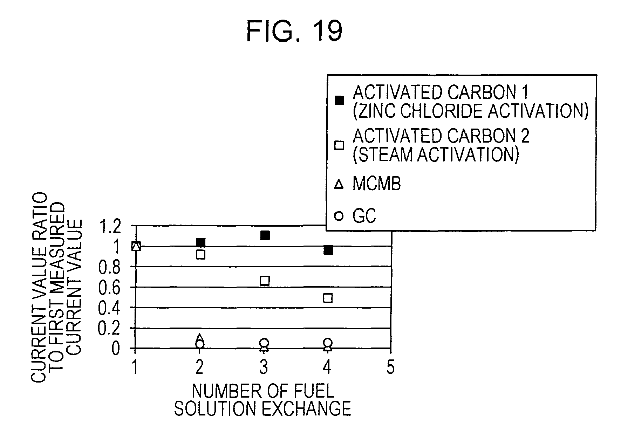

An electron mediator was immobilized on the layer in which activated carbon 1, activated carbon 2, mesocarbon microbeads (MCMB) and glassy carbon (GC) particles are provided on the carbon electrode formed of fibrous carbon as carbon particles, and in addition to glucose, the fuel solution containing NAD⁺/NADH-dependent glucose dehydrogenase, diaphorase (DI) and nicotinamide adenine dinucleotide as enzymes was repeatedly exchanged to measure CV. The result thereof is shown in Fig. 19. From Fig. 19, it was confirmed that while the catalytic current value is decreased dramatically by the fuel solution exchange in the mesocarbon microbeads (MCMB) and glassy carbon (GC) particles having no pore or little pores, the catalytic current value is retained in the activated carbon 1 and activated carbon 2 regardless of the fuel solution exchange. That is, it was confirmed that the electron mediator is strongly retained on the activated carbon 1 and activated carbon 2 having nanopores in a reactable state. Moreover, from Fig. 19, it is found that elution of nicotinamide adenine dinucleotide is more effectively prevented in the case of using zinc chloride-activated activated carbon 2 in comparison with the case of using the steam activated carbon 1.

As described above, according to the first embodiment, since the carbon 12 having nanopores is formed on the electrode 11, the nicotinamide adenine dinucleotide and/or the derivative thereof can be strongly immobilized in the nanopore of the carbon 12 as enzymes while high reactivity is retained. Therefore, the elution of the nicotinamide adenine dinucleotide and/or the derivative thereof from the nicotinamide adenine dinucleotide-immobilized electrode can be effectively prevented. In addition, when the enzyme and electron mediator are immobilized on the nicotinamide adenine dinucleotide-immobilized electrode, the elution of the enzyme and electron mediator can be effectively prevented.

### <2. Second Embodiment>

### [Biofuel Cell]

Next, a second embodiment of the present invention is described. In the second embodiment, the enzyme/nicotinamide adenine dinucleotide-immobilized electrode according to the first embodiment is used as a negative electrode of a biofuel cell.

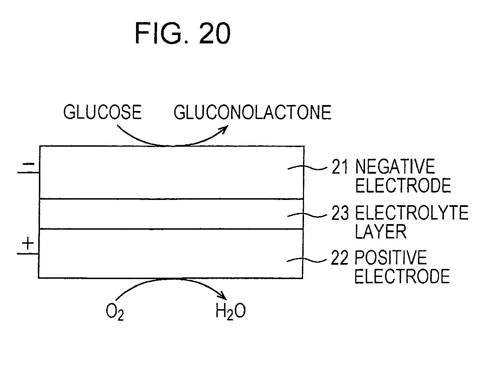

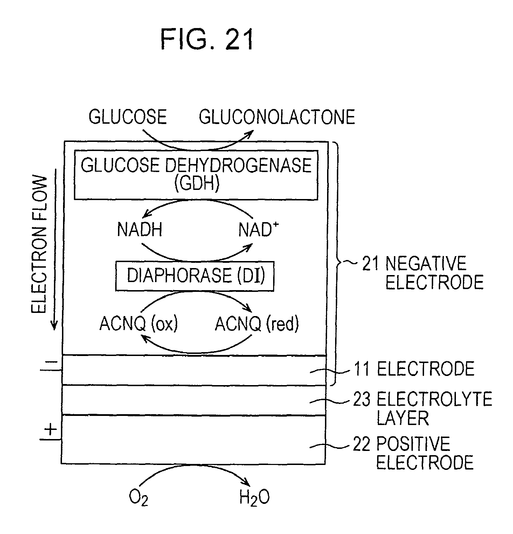

Fig. 20 schematically shows the biofuel cell. The biofuel cell uses glucose as fuel. Fig. 21 schematically shows a detailed configuration of the negative electrode of the biofuel cell, an example of an enzyme group and a coenzyme enclosed in a liposome 12 immobilized on the negative electrode, and an electron transfer reaction by the enzyme group and the coenzyme.

As shown in Fig. 20 and Fig. 21, the biofuel cell has a structure in which a negative electrode 21 and a positive electrode 22 face each other with an electrolyte layer 23 provided therebetween. On the negative electrode 21, the glucose supplied as the fuel is decomposed by an enzyme to extract electrons and produce protons (H⁺). On the positive electrode 22, water is produced from the protons transferred from the negative electrode 21 through the electrolyte layer 23, and electrons transferred from the negative electrode 21 through an external circuit, for example, oxygen in air.

As the negative electrode 21, the enzyme/nicotinamide adenine dinucleotide-immobilized electrode according to the first embodiment is used. Specifically, the enzyme/nicotinamide adenine dinucleotide-immobilized electrode includes the electrode 11 on which the liposome 12 having a pore 17 permeable to glucose and formed in the bimolecular lipid membrane is immobilized. In the liposome 12, an enzyme involved in decomposition of glucose, a coenzyme which produces a reduced form with an oxidation reaction in the glucose decomposition process, and a coenzyme oxidase which oxidizes the reduced form of the coenzyme are enclosed. As necessary, in addition to the liposome 12, an electron mediator which receives electrons produced with the oxidation of the coenzyme from the coenzyme oxidase and transfers the electrons to the electrode 11 is also immobilized on the electrode 11.

As the enzyme involved in decomposition of glucose, for example, glucose dehydrogenase (GDH), preferably NAD-dependent glucose dehydrogenase, can be used. In the presence of the oxidase, for example, β-D-glucose can be oxidized to D-glucono-δ-lactone.

Further, this D-glucono-δ-lactone can be decomposed into 2-keto-6-phospho-D-gluconate in the presence of the two enzymes of gluconokinase and phosphogluconate dehydrogenase (PhGDH). That is, the D-glucono-δ-lactone is changed to D-gluconate by hydrolysis, and D-gluconate is phosphorylated to 6-phospho-D-gluconate by hydrolyzing adenosine triphosphate (ATP) into adenosine diphosphate (ADP) and phosphoric acid in the presence of gluconokinase. This 6-phospho-D-gluconate is oxidized to 2-keto-6-phospho-D-gluconate by the action of oxidase PhGDH.

In addition, besides the above-described decomposition process, glucose can be decomposed to CO₂ by using sugar metabolism. The decomposition process using sugar metabolism is roughly divided into decomposition of glucose by a glycolysis system, formation of pyruvic acid, and TCA cycle, but these are well known reaction systems.

An oxidation reaction in a decomposition process of a monosaccharide is performed accompanying a reduction reaction of a coenzyme. The coenzyme is substantially determined depending on the enzyme acting, and in the case of GDH, NAD⁺ is used as the coenzyme. That is, when β-D-glucose is oxidized to D-glucono-δ -lactone by the action of GDH, NAD⁺ is reduced to NADH to produce H⁺.

The produced NADH is immediately oxidized to NAD⁺ in the presence of diaphorase (DI) to produce two electrons and H⁺. Therefore, two electrons and two H⁺ are produced by one step of oxidation reaction per molecule of glucose. In two steps of oxidation reaction, four electrons and four H⁺ in total are produced.

The electrons produced in the above-described process are transferred to the electrode 11 from diaphorase through the electron mediator, and H⁺ are transported to the positive electrode 22 through the electrolyte layer 23.

The enzyme, the coenzyme and the electron mediator are preferably maintained at optimum pH for the enzyme, for example, close to pH 7, with a buffer solution such as a phosphate buffer solution, a tris buffer solution, or the like, which is contained in the electrolyte layer 23, in order to permit effective and stationary electrode reaction. As the phosphate buffer solution, for example, NaH₂PO₄ or KH₂PO₄ is used. Further, excessively high or low ionic strength (I.S.) adversely affects enzyme activity, but proper ionic strength, for example, about 0.3, is preferable in consideration of electrochemical response. However, there are optimum values of pH and ionic strength for each of the enzymes used, and the pH and ionic strength are not limited to the above-described values.

Fig. 21 shows, as an example, a case where the enzyme involved in decomposition of glucose is glucose dehydrogenase (GDH), the coenzyme which produces a reduced form with oxidation reaction in the decomposition process of glucose is NAD⁺, the coenzyme oxidase which oxidizes NADH as a reduced form of the coenzyme is diaphorase (DI), and the electron mediator which receives electrons produced with oxidation of the coenzyme from the coenzyme oxidase and transfers the electrons to the electrode 11 is ACNQ.

The positive electrode 22 includes an electrode in which an enzyme which decomposes oxygen, for example, bilirubin oxidase, laccase, ascorbate oxidase, or the like is immobilized on an electrode formed of an electrode material and the like. An outer portion (a portion opposite to the electrolyte layer 23) of the positive electrode 22 is usually formed of a gas diffusion layer formed of porous carbon, but there is no limitation thereto. In addition to the enzyme, preferably, an electron mediator which transfers electrons to the positive electrode 22 is also immobilized on the positive electrode 22.

On the positive electrode 22, oxygen in air is reduced in the presence of the enzyme which decomposes oxygen, producing water by H⁺ from the electrolyte layer 23 and the electrons from the negative electrode 21.

The electrolyte layer 23 is used for transporting the H⁺ produced on the negative electrode 21 to the positive electrode 22 and is formed of a material which has no electron conductivity and which can transport H⁺. As the electrolyte layer 23, specifically, for example, the above-described material such as cellophane or the like can be used.

In the biofuel cell configured as described above, when glucose is supplied to the negative electrode 21, the glucose is decomposed with a catabolic enzyme including oxidase. Since the oxidase is involved in the decomposition process of a monosaccharide, electrons and H⁺ can be produced on the negative electrode 21 side, and a current can be produced between the negative electrode 21 and the positive electrode 22.

Next, a specific example of a structure of the biofuel cell is described.

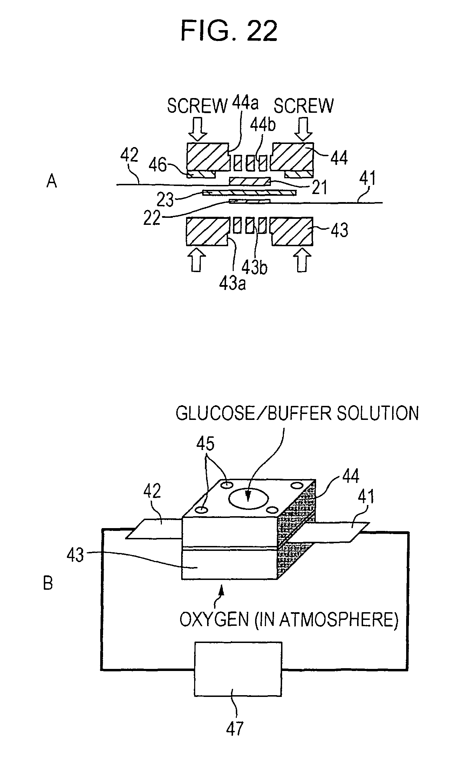

As shown in Figs. 22A and B, the biofuel cell has a configuration in which the negative electrode 21 and the positive electrode 22 face each other with the electrolyte layer 23 provided therebetween. In this case, Ti current collectors 41 and 42 are disposed below the positive electrode 22 and the negative electrode 21, respectively, so that a current can be easily collected. Reference numerals 43 and 44 each denote a fixing plate. The fixing plates 43 and 44 are fastened with screws 45 to hold all the positive electrode 22, the negative electrode 21, the electrolyte layer 23, and the Ti current collectors 41 and 42 therebetween. An air-intake circular recess 43a is provided in one (outer side) of the sides of the fixing plate 43, and many holes 43b are provided at the bottom of the recess 43a so as to pass to the other side. These holes 43b functions as an air supply passage to the positive electrode 22. On the other hand, a fuel charging circular recess 44a is provided in one (outer side) of the sides of the fixing plate 44, and many holes 44b are provided at the bottom of the recess 44a so as to pass to the other side. These holes 44b functions as a fuel supply passage to the negative electrode 21. A spacer 46 is provided in the peripheral portion of the other side of the fixing plate 44 so as to form a predetermined space between the fixing plates 43 and 44 when the fixing plates 43 and 44 are fastened together with the screws 45.

As shown in Fig. 22B, a load 47 is connected between the Ti current collectors 41 and 42 so that electric power is generated by placing, as the fuel, a glucose solution which contains glucose dissolved in a phosphate buffer solution in the recess 44a of the fixing plate 44.

According to the second embodiment, the enzyme/nicotinamide adenine dinucleotide-immobilized electrode according to the first embodiment is used as the negative electrode 21 so that elution of nicotinamide adenine dinucleotide from the negative electrode 21 can be effectively prevented. Therefore, performance degradation of the biofuel due to elution of nicotinamide adenine dinucleotide from the negative electrode 21 can be prevented.

### <3. Third Embodiment>

### [Bioreactor]

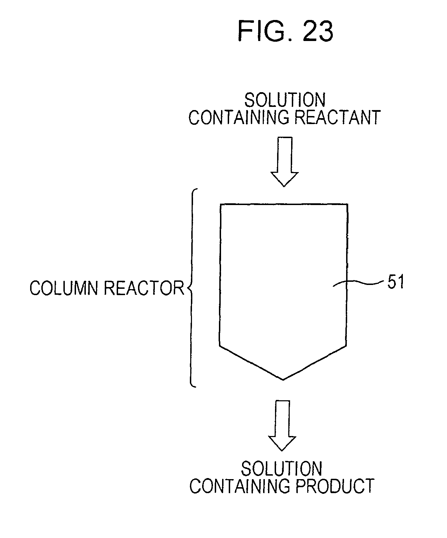

Fig. 23 shows a bioreactor according to a third embodiment.

As shown in Fig. 23, in the bioreactor, a nicotinamide adenine dinucleotide-immobilized carrier 51 is provided in a column reactor. The nicotinamide adenine dinucleotide-immobilized carrier 51 is a carrier in which carbon 12 having nanopores is provided on a predetermined substrate, nicotinamide adenine dinucleotide and/or a derivative thereof are immobilized on the carbon 12, and an enzyme using the nicotinamide adenine dinucleotide and/or the derivative thereof as a coenzyme is immobilized as in the nicotinamide adenine dinucleotide-immobilized electrode according to the first embodiment.

In the bioreactor, a solution containing a reactant is allowed to flow in the column reactor and contact the nicotinamide adenine dinucleotide-immobilized carrier 51. Then, a product is obtained from a reactant by the enzyme reaction of the enzyme immobilized on the nicotinamide adenine dinucleotide-immobilized carrier 51.

In the bioreactor, the same is applied as in the first embodiment except the above description unless contrary to the nature thereof.

According to the third embodiment, in the bioreactor, the same advantages as in the first embodiment are obtained. In addition, since elution of nicotinamide adenine dinucleotide and/or the derivative thereof from the nicotinamide adenine dinucleotide-immobilized carrier 51 can be effectively prevented, it is not necessary to add new or re-refined nicotinamide adenine dinucleotide and/or a derivative thereof in every reaction and thus, the cost can be reduced.

### <4. Fourth Embodiment>

### [Enzyme/Nicotinamide Adenine Dinucleotide-Immobilized Electrode]

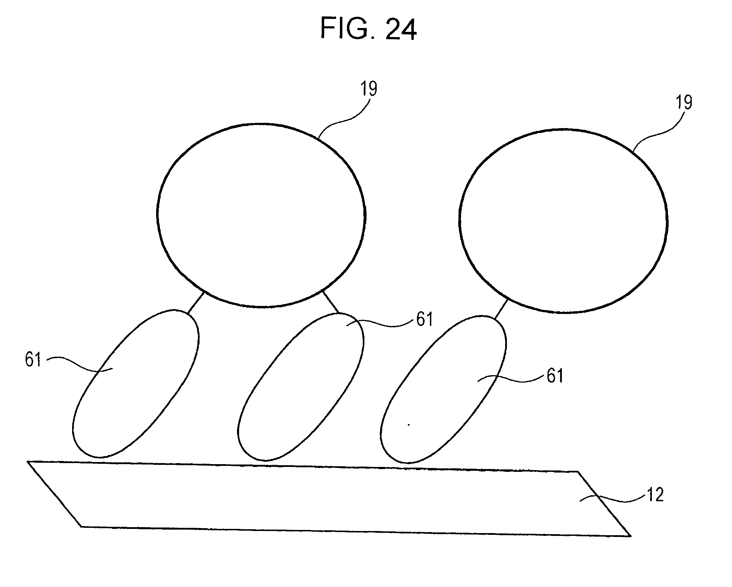

Fig. 24 shows an enzyme/nicotinamide adenine dinucleotide-immobilized electrode according to a fourth embodiment.

As shown in Fig. 24, in the enzyme/nicotinamide adenine dinucleotide-immobilized electrode, the enzyme 19 is bonded to the surface of the carbon 12 having nanopores formed on the surface of the electrode (not shown), via a compound for enzyme immobilization 61 having a portion to be bonded to carbon and a portion to be bonded to an enzyme. More specifically, the portion to be bonded to carbon of the compound for enzyme immobilization 61 is bonded to the surface of the carbon 12, and the portion to be bonded to an enzyme of the compound for enzyme immobilization 61 is bonded to enzyme 19. Typically, the portion to be bonded to carbon of the compound for enzyme immobilization 61 enters the nanopore of the carbon 12 and is adsorbed onto the surface of the carbon 12, or bonded to the carbon by π bonding and the like. From the viewpoint of adsorption properties to the nanopore of the carbon 12, the compound for enzyme immobilization 61 preferably has, for example, a molecular weight of 1000 or less, and a bivalent charge or higher.

As the compound for enzyme immobilization 61, for example, biotin molecules capable of being adsorbed onto the surface of the carbon 12 by entering the nanopore of the carbon 12, fluorescein adsorbed onto the surface of the carbon 12 by π bonding, molecules having chirality, various polycyclic aromatic hydrocarbons (PAHs) and the like can be used and selected as necessary. Specific examples of the compound for enzyme immobilization 61 are as follows.

### <Polycyclic aromatic hydrocarbons>

· Pyrene derivatives
· Coronene derivatives
· Chrysene derivatives
· Naphtacene derivatives
· Pentacene derivatives
· Picene derivatives
· Perylene derivatives
· Anthracene derivatives
· Phenanthrene derivatives
· Fluorene derivatives
· Naphtalene derivatives
· Fluoranthene derivatives
· Acenaphthene derivatives
· Acenaphthylene derivatives
· Triphenylene derivatives

### <Substances bonding to carbon by π bonding>

· Terthiophene derivatives
· Tetraphenylbenzidine derivatives
· Tetraphenylnaphtacene derivatives
· Benzothiophene derivatives
   Thiophene derivatives
· Pyrrole derivatives
· Carbazole derivatives
   · Phenanthroline derivatives
Phenylpyridine derivative
   Quinoline derivatives
• Triphenylamine derivatives
• Diphenylamine derivatives
• Oxazole derivatives
• Oxadiazole derivatives
• p-Phenyl derivatives
• Quinacridone derivatives
• Flucrenone derivatives
• Phthalocyanine derivatives
• Spiropyran derivatives
• Viologen derivatives
• Spiroperimidine derivatives
• Phenyl esters
• Benzoic acids
• Biphenyl derivatives
• Benzophenone derivatives
• Diphenylamine derivatives
• Diphenyl ethers
• Diphenyl sulfides
• Diphenyl sulfones
• Bisphenol derivatives
• Anthraquinone derivatives
• Phosphonium compounds
• Fluorescein derivatives
• Rhodamine derivatives
• Coumarin derivatives
• Cyanine derivatives

### <Other Compounds>

Compounds including nucleosides, nucleotides, riboses, sugars, amino acids, lipids, sterols, terpenes, steroids, propanoids, alkanoid, alcohols, amines, amino alcohols, isocyanatos, amides, esters, diols, glycidyl compounds, hydrazines, silanes, polyketides, polyamines, porphyrins, vitamins, crown ethers, cyclodextrins, diacrylates, dimethacrylates, tetracarboxylic acids, pyrrolidines, alkanols, carboxylic acids, azulenes, quaternary ammonium ions, fluorocarbons and cyclic organic compounds such as aryls and cycloalkanes.

Among the compounds for enzyme immobilization 61, pyrene derivatives are preferalbe. The pyrene derivative has a functional group and a reactive group such as an amine group, a sulfone group, a sulfhydryl group, a carboxyl group, a hydroxyl group, an azide group, an azo group, a nitro group, a nitrile group, a cyano group, an allenic group, an isonitrile group, a urea group, an aldehyde group, a ketone group, NHS ester, imide ester, maleimide, pyridyl dithiol, aryl azide, haloacetate, isocyanato, carbodiimide, aryl azide, diazirine, hydrazide, psoralen, iodine, pyridine disulfide and vinyl sulfone. In addition, the functional group and the reactive group may be separated from the pyrene using an alkyl group, polyethyleneglycol and the like as a spacer. Moreover, the modification of the functional group and the reactive group, the spacer and the like may be bonded to carbon at any place in the pyrene. The pyrene derivative can be bonded to protein via the functional group and the reactive group. Furthermore, the protein specifically bonding to the molecules can be immobilized by modifying the pyrene derivative with molecules of biotin, glutathione, sugar molecules or antigens.

### <Example 5>

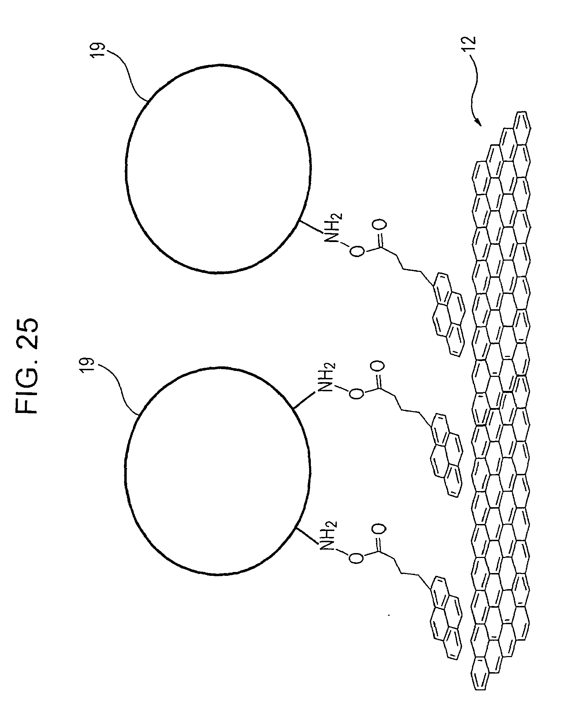

In Example 5, while biocarbon (BC) was applied on the carbon electrode formed of fibrous carbon as the carbon 12 having nanopores, in addition to nicotinamide adenine dinucleotide, AQ2S (anthraquinone-2-sulfonic acid) was immobilized in the nanopore as an electron mediator, and NAD⁺/NADH-dependent glucose dehydrogenase (GDH)(EC 1.1.1.47, manufactured by Amano Enzyme Inc)and diaphorase (DI) (EC 1.8.1.4, manufactured by Amano Enzyme Inc) were immobilized as enzymes via NHS pyrene to produce an enzyme/nicotinamide adenine dinucleotide-immobilized electrode. Fig. 25 shows the case where the compound for enzyme immobilization 61 is NHS pyrene.

### <Comparative Example 2>

In the Comparative Example 2, an enzyme/nicotinamide adenine dinucleotide-immobilized electrode was produced as in Example 5 except for not using NHS pyrene as the compound for enzyme immobilization 61.

### <Test Results>

Using glucose as a fuel, a fuel solution (pH 7.5) in which glucose is dissolved in 1.0 M of a phosphate buffer solution (KPB, KH₂PO₄) so as to have a glucose concentration of 0.8 M was prepared. In the fuel solution, the galvanostatic measurement (1.5 mA/cm²) was performed using the enzyme/nicotinamide adenine dinucleotide-immobilized electrodes of Example 5 and Comparative Example 2, and at this time, the fuel solution was exchanged every 1 hour to measure the repetition properties thereof. When the fuel solution was exchanged, strong pipetting was performed directly on the enzyme/nicotinamide adenine dinucleotide-immobilized electrode 20 times.

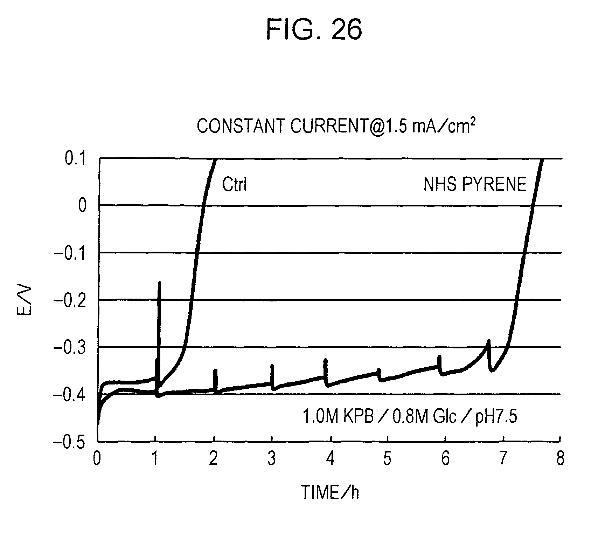

The measurement result is shown in Fig. 26. As shown in Fig. 26, while the voltage decreases in 1 hour in Comparison Example 2 in which GDH and DI were directly adsorbed onto the biocarbon without using NHS pyrene, the voltage is maintained for 7 hours in Example 5 in which GDH and DI were adsorbed onto the biocarbon using NHS pyrene.

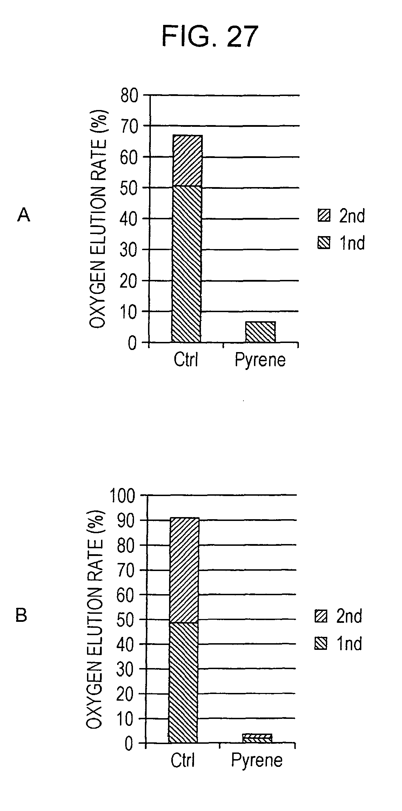

In the galvanostatic measurement, when the fuel solution was exchanged every 1 hour, waste liquid was collected, and the enzyme contained in the first and second waste liquid was analyzed by SDS-PAGE to analyze the eluted enzyme. The measurement result using biocarbon as the carbon 12 having nanopores in the case of using GDH and DI as the enzyme is shown in Fig. 27A. In addition, the measurement result using ketjen black as the carbon 12 having nanopores in the case of using bilirubin oxidase (BOD) as the enzyme is shown in Fig. 27B. From Figs. 27A and B, the result indicates that when the enzyme is directly immobilized onto the biocarbon or ketjen black without using NHS pyrene, the enzyme of 70% to close to 90% is eluted at the second fuel solution exchange and therefore, the voltage is decreased. Contrarily, the result indicates that when the enzyme is immobilized onto the biocarbon or ketjen black using NHS pyrene, elution of the enzyme is suppressed down to 10% or less and thus, the enzyme is strongly immobilized by NHS pyrene. Moreover, it is found that the effect of the immobilization using NHS pyrene can be obtained regardless of whether the carbon 12 having nanopore is biocarbon or ketjen black, or the type of enzyme.

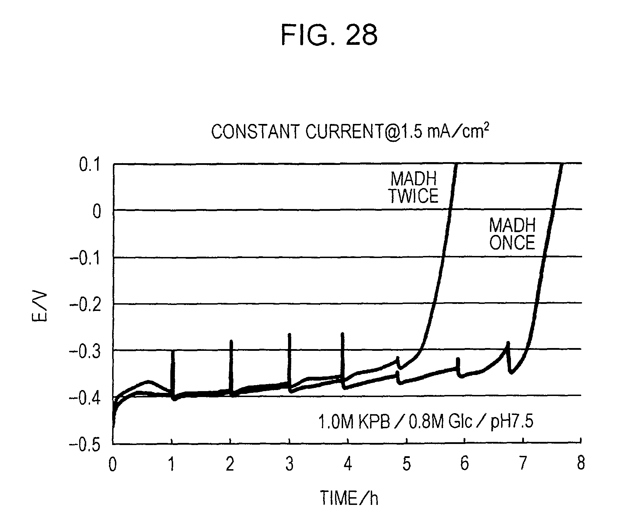

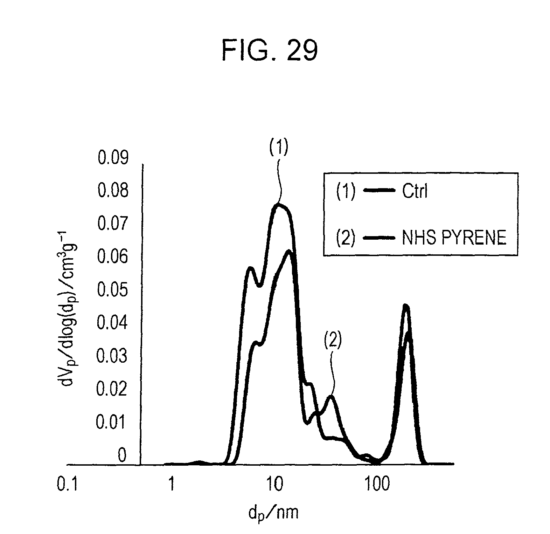

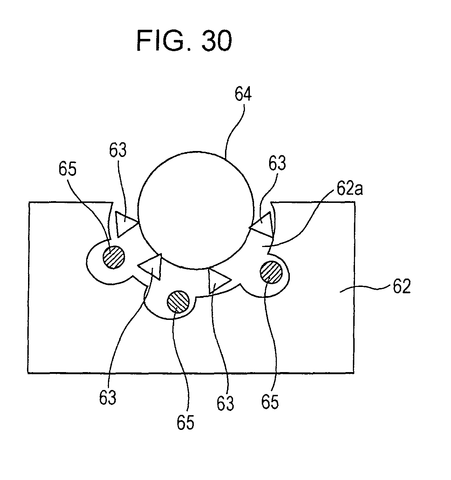

Fig. 28 shows a result of galvanostatic measurement (1.5 mA/cm²) by changing the immobilization amount of the nicotinamide adenine dinucleotide in the enzyme/nicotinamide adenine dinucleotide-immobilized electrode in which, in addition to nicotinamide adenine dinucleotide, using biocarbon as the carbon 12 having nanopores, AQ2S as an electron mediator is immobilized and GDH and DI as enzymes are immobilized in the nanopore via NHS pyrene. From Fig. 28, even when the immobilization amount of the nicotinamide adenine dinucleotide is reduced, it is found that outputs and repetition properties are maintained. This can be considered that the enzyme is immobilized around the nanopore by NHS pyrene, which plays a role to effectively prevent elution of the nicotinamide adenine dinucleotide and the electron mediator which are adsorbed and immobilized in the nanopore (which is to say, the role of a lid). Practically, as shown in Fig. 29, the pore distribution of the biocarbon on which NHS pyrene is applied on the surface and the biocarbon on which NHS pyrene is not applied was measured and it was confirmed that the nanopore volume was decreased due to the application of NHS pyrene. As shown in Fig. 30, an enzyme 64 is immobilized on the inside surface of a nanopore 62a of biocarbon 62 via NHS pyrene 63. A reference numeral 65 denotes an electron mediator.

Next, a result of comparing the enzyme immobilization capacity and the electrode performance according to the type of the compound for enzyme immobilization 61 is described. As the compound for enzyme immobilization 61, the following 5 types of compounds were used.

### • 1-Pyrenebutanoic acid, succinimidyl ester (Pyrene)

The chemical structure is as follows:

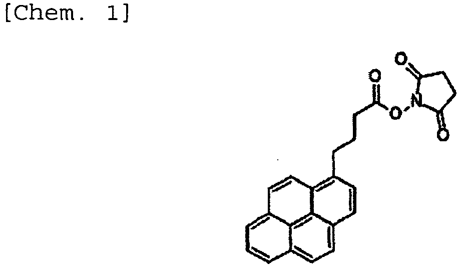

Since the pyrene (the molecular weight is 385) has high π bonding capacity (number of π electrons=8) and is a fluorescent substance, fluorescent detection is possible.

### • N-[(9H-Fluoren-9-ylmethoxy)carbonyloxylsuccinimide (Fmoc)

The chemical structure is as follows:

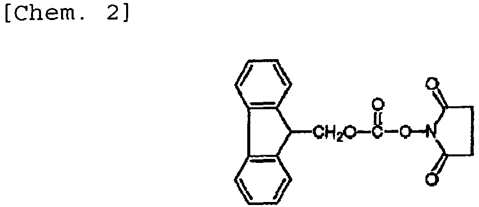

Since the Fmoc (the molecular weight is 431) is planar and has π bonding capacity (number of π electrons=6) and is a fluorescent substance, fluorescent detection is possible.

### • NHS-Fluorescein (Fluorescein)

The chemical structure is as follows:

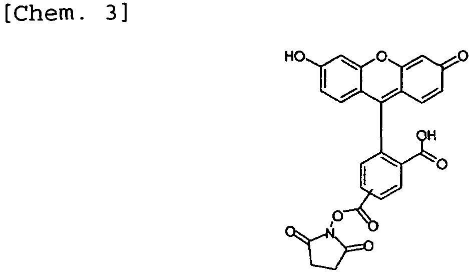

While the fluorescein (the molecular weight is 473) has π bonding capacity (number of π electrons=9), rotation occurs in the molecular and thus, the fluorescein is not planar. Since the fluorescein is a fluorescent substance, fluorescent detection is possible.

### • Succinimidyl(2R)-6-(Tetrahydro-2H-pyran-2-yloxy)-2,5,7,8-tetramethylchroman-2-carboxylate (NPCA)

The chemical structure is as follows:

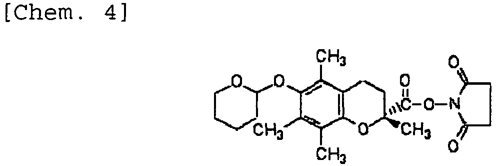

While the NPCA (the molecular weight is 431) has π bonding capacity (number of π electrons=3), it can be considered that the π bonding capacity is weaker than that of Pyrene. The NPCA has optical activity and optical resolution capacity and optical stereodifferentiation capacity can be expected according to applications.

### • NHS-Biotin (Biotin)

The chemical structure is as follows:

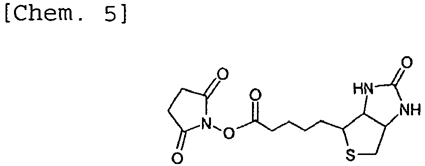

The biotin (the molecular weight is 341) does not have π bonding capacity. The biotin itself is water soluble vitamin B7 and thus, it can be considered that biotin has high stability. The biotin can be detected by adipine protein with high sensitivity and specificity.

### <Test Results>

Using the 5 types of compounds in equal weight as the compound for enzyme immobilization 61, the enzyme/nicotinamide adenine dinucleotide-immobilized electrode using biocarbon was produced as in Example 5 and the current value measurement by the comparison of enzyme elution and the potentiostatic measurement (-0.35 V) was performed.

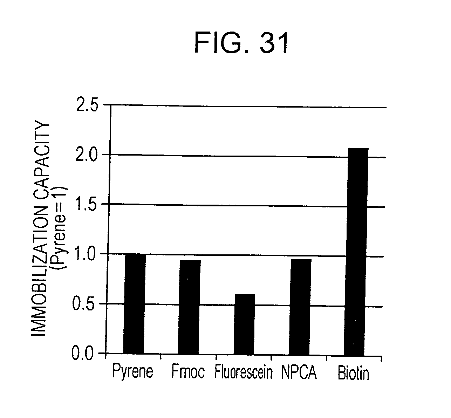

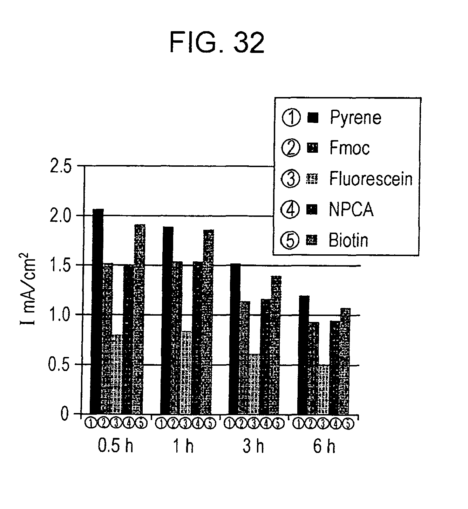

The comparison result of the enzyme immobilization capacity is shown in Fig. 31, and the comparison result of the current value (current density I (mA/cm²)) is shown in Fig. 32. As shown in Fig. 31, when the immobilization capacity of pyrene was set as 1, pyrene, Fmoc and NPCA exhibited the same degree of relative immobilization capacity, but fluorescein exhibited half immobilization capacity. On the other hand, biotin exhibited twice the immobilization capacity of pyrene. In addition, as shown in Fig. 32, with regard to the current value, pyrene was the highest, biotin was slightly low, Fmoc and NPCA were further lower, and fluorescein was the lowest.

From the above, the same effect as pyrene was confirmed even in a molecule having a planar π bonding portion such as Fmoc, NPCA and the like. Also, in the biotin molecule which is considered that the molecule does not have π bonding but is easily adsorbed in the nanopore of the biocarbon, it was confirmed that the enzyme can be immobilized by effective anchoring. Meanwhile, in fluorescein which has a large number of n electrons but the π bonding portion is rotatable in the molecule, it was confirmed that the immobilization capacity and the current value were significantly lower than those of pyrene.

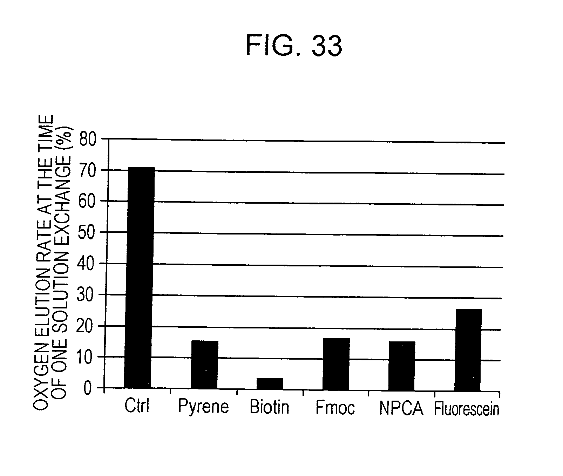

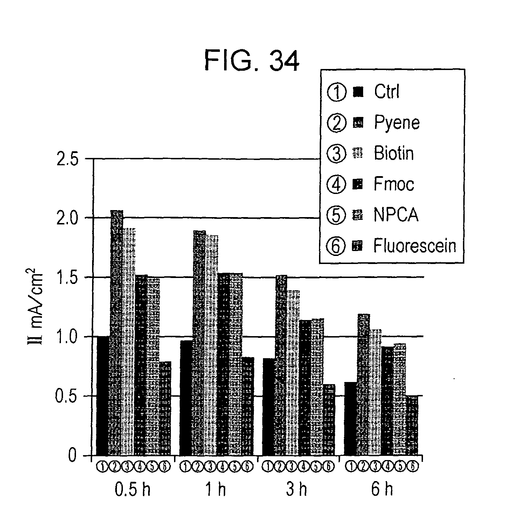

The comparison result of the enzyme elution rate when the fuel solution was exchanged once using the enzyme/nicotinamide adenine dinucleotide-immobilized electrode as in Example 5 is shown in Fig. 33, and the comparison result of the current value (current density I (mA/cm²)) is shown in Fig. 34. In Figs. 33 and 34, for comparison, the enzyme elution rate and the current value in the case of using the enzyme/nicotinamide adenine dinucleotide-immobilized electrode (Ctrl) which is only different in that the enzyme is immobilized not using the compound for enzyme immobilization are shown. As shown in Fig. 33, in the case where the enzyme is immobilized using pyrene, Fmoc, fluorescein, NPCA and biotin, the enzyme elution rate is very low, in comparison with the case where the enzyme is immobilized not using pyrene, Fmoc, fluorescein, NPCA and biotin. Moreover, as shown in Fig. 34, in the case where the enzyme is immobilized using pyrene, Fmoc, fluorescein, NPCA and biotin, the same current value is obtained as in the case where the enzyme is immobilized not using pyrene, Fmoc, fluorescein, NPCA and biotin.

According to the fourth embodiment, the enzyme 19 is bonded to the surface of the carbon 12 having nanopores via the compound for enzyme immobilization 61 so that the enzyme 19 can be strongly immobilized while activity is retained, and elution can be very effectively prevented. In addition, the electrode in which the compound for enzyme immobilization 61 is adsorbed on the carbon 12 having nanopores, particularly, in the nanopore 13a of the carbon particle 13 having nanopores 13a, efficiency in direct electron transfer by the enzyme 19 can be improved by orientation control and the like.

### <5. Fifth Embodiment>

### [Substance Remover]

In the fifth embodiment, a substance remover is described.

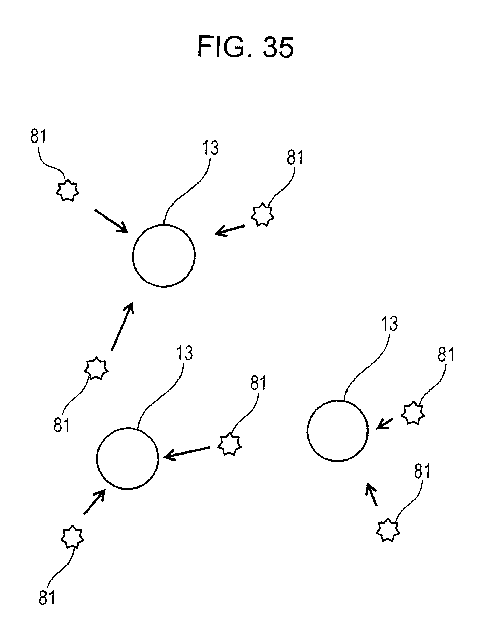

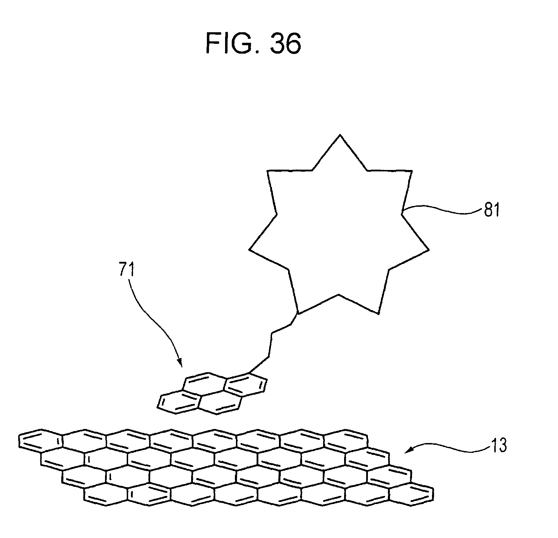

As shown in Fig. 35, in the substance remover, the carbon particles 13 respectively charged positively or negatively are obtained by adsorbing a compound, which is the same as the compound for enzyme immobilization 61 and charged positively or negatively, on the carbon particle 13 having nanopores 13a on the surface. Then, for example, the carbon particles 13 are dispersed in a solution in which a substance 81 to be removed such as a toxic substance, virus and the like is dissolved. Then, the substance 81 to be removed contained in the solution is captured by a reactive group of the compound which is adsorbed onto the surface of the carbon particle 13 and charged positively or negatively. Then, by applying an electric field to the solution, the carbon particle 13 capturing the substance 81 to be removed can be electrophoresed and collected. Thus, the substance 81 to be removed can be removed from the solution. In Fig. 36, as an example, a state in which the above-described compound is a pyrene derivative 71 and the substance 81 to be removed is captured by the pyrene derivative 71 is shown.

In addition, a molecule not only charged positively or negatively but also adsorbable onto the surface of the nanopore 13a, such as pyrene with various functional groups retained at the tip end, can be adsorbed and retained on the surface of the carbon particle 13, and thus, various properties according the functional groups can be imparted to the carbon particle 13. For example, when the carbon particle 13 onto which NHS pyrene retaining NHS which has bonding capacity to protein at the tip end is adsorbed is used, protein in an aerosol and solution can be captured and strongly immobilized on the surface of the carbon particle 13 and resultantly, the carbon particle 13 is collected by filtration so that protein can be removed in an aerosol and solution. Moreover, since the reactive group of the compound charged positively or negatively, instead of NHS, is retained, a target molecule is captured with the electrostatic interaction and then, can be collected and separated by electrophoresis associated with the solution filtration and electric field application.

According to the fifth embodiment, a new substance remover can be realized.

### <6. Sixth Embodiment>

### [Protein Remover]

In a sixth embodiment, a protein remover is described.

In the protein remover, a compound which is the same as a compound for protein immobilization and can have a functional group that can be bonded to protein is adsorbed onto the carbon particles 13 having nanopores 13a on the surface to obtain the carbon particles 13 respectively charged positively or negatively. Then, the carbon particles 13 are dispersed in a solution in which protein to be removed is dissolved. Then, the protein to be removed which is dissolved in the solution is captured by a reactive group of a compound which is adsorbed onto the surface of the carbon particle 13 and charged positively or negatively. After that, by applying an electric field in the solution, the carbon particle 13 by which the protein to be removed is captured can be electrophoresed and collected. Therefore, the protein can be removed from the solution.

According to the sixth embodiment, a new protein remover can be realized.

### <7. Seventh Embodiment>

### [Antigen Remover]

According to the seventh embodiment, an antigen remover is described.

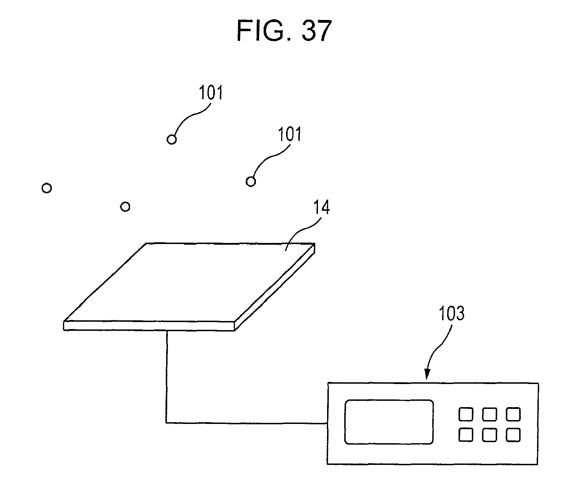

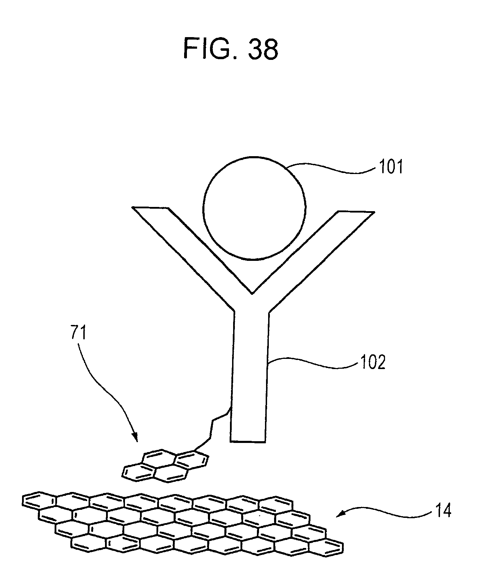

As shown in Fig. 37, in the antigen remover, an antibody having a specific interaction with the antigen is bonded to the surface of the carbon sheet 14 having nanopores 14a via the same compound as the compound for protein immobilization. Then, the carbon sheet 14 is placed in a solution in which an antigen 101 to be removed is dissolved. Then, the antigen 101 dissolved in the solution is bonded to the antibody which is adsorbed onto the surface of the carbon sheet 14. Then, the antigen 101 dissolved in the solution can be removed. In Fig. 38, as an example, a state in which the above-described compound is the pyrene derivative 71, an antibody 102 is bonded to the pyrene derivative 71, and the antigen 101 is bonded to the antibody 102 is shown.

As shown in Fig. 37, a measurement apparatus which senses the antigen 101 can be obtained by brining the carbon sheet 14 into contact with a detector 103.

According to the seventh embodiment, a new antigen remover can be realized.

Also, in addition to the antigen-antibody reaction, a specific substrate can be captured by using protein having substrate specificity such as a receptor protein.

### <8. Eighth Embodiment>

### [Vaccine]

In an eighth embodiment, a vaccine is described.

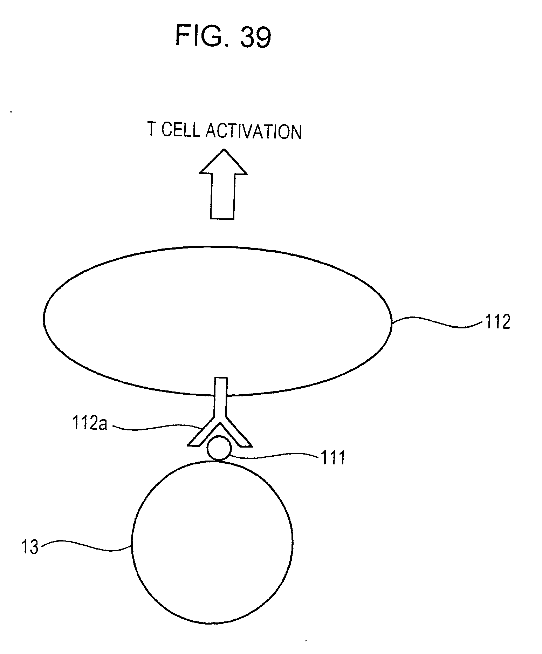

As shown in Fig. 39, in the vaccine, MHC class I, MHC class II or an extracellular region thereof (hereinafter, these are referred to as MHC) is bonded to the carbon particle 13 having nanopores 13a on the surface via a compound for bonding. An antigen 111 such as a pathogen and pathogen-derived peptide is bonded to MHC bonded on the surface of the carbon particle 13. Then, a MHC-antigen complex is immobilized on the surface of the carbon particle 13.

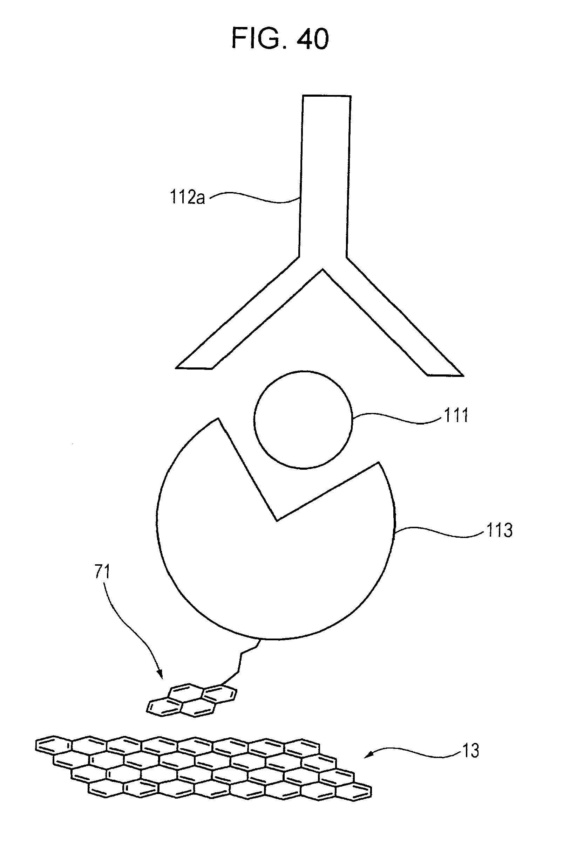

The carbon particle 13 on which the MHC-antigen complex is immobilized is injected in the body through a mouth, nose, abdominal cavity, hypodermic injection and the like, and exhibits antigen presentation to an immune reaction system in a mucous membrane and blood to function as a vaccine. At this time, for example, as shown in Fig, 39, a TCR 112a of a T cell 112 is bonded to the antigen 111 to activate the T cell 112. In Fig. 40, as an example, a state in which the above-described compound for bonding is the pyrene derivative 71, MHC 113 is bonded to the pyrene derivative 71, the antigen 101 is bonded to the MHC 113, and the TCR 112a of the T cell 112 is bonded to the antigen 101.

According to the eighth embodiment, a new vaccine can be realized.

### <9. Ninth Embodiment>

### [Bioreactor]

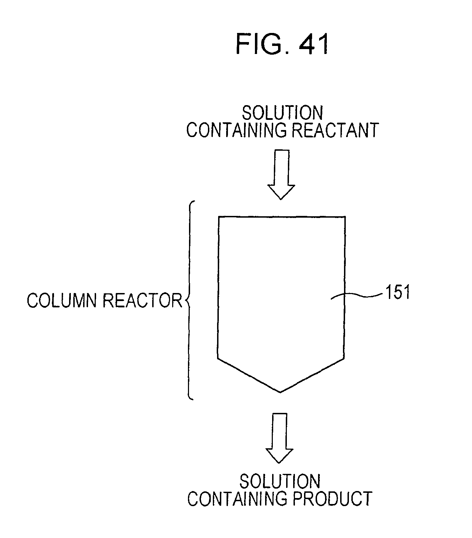

Fig. 41 shows a bioreactor according to a ninth embodiment.

As shown in Fig. 41, in the bioreactor, a protein-immobilized carrier 151 on which protein such as an enzyme is immobilized is provided in a column reactor. The protein-immobilized carrier 151 is a carrier in which carbon 12 having nanopores is provided on a predetermined substrate and protein such as an enzyme is immobilized on the carbon 12 via a compound for protein immobilization. On the carbon 12, other compounds may be immobilized as necessary, in addition to protein.

In the bioreactor, a solution containing a reactant is allowed to flow in the column reactor and contact the protein-immobilized carrier 151, and thus, a reactant by the protein such as an enzyme immobilized on the protein-immobilized carrier 151 is obtained.

According to the ninth embodiment, a reaction product by the protein of the protein-immobilized carrier 151 can effectively and easily be produced and collected. Alternatively, a substance which interacts with the protein of the protein-immobilized carrier 151 can be refined and separated. In addition, it is possible to effectively prevent elution of protein from the protein-immobilized carrier 151, and therefore, the cost can be reduced due to an improvement in reusable performance and a decrease in protein amount used.

Although the embodiments and the examples of the present disclosure are specifically described above, the present disclosure is not limited to the above-described embodiments and examples, and various modifications can be made.

For example, the numerical values, structures, configurations, shapes, materials, and the like described in the above-described embodiments and examples are only examples, and numerical values, structures, configurations, shapes, materials, and the like different from these may be used as necessary.

Also, in addition to the nicotinamide adenine dinucleotide and/or the derivative thereof, other coenzymes, peptides and the like may be immobilized on the carbon and/or the inorganic compound as necessary. Examples of other coenzymes include water soluble vitamins such as a vitamin B group, vitamin C and folic acid, fat soluble vitamins such as vitamin A, vitamin D, vitamin E, and vitamin K beta-carotene, electron transfer substances such as ubiquinone, flavin mononucleotide (FMN/MMNH₂), flavin adenine dinucleotide (FAD/FADH₂), cytochrome and chlorophyl, and the like, but there is no limitation thereto. In addition, examples of the peptide include various hormones, polypeptide functioning as cytokine and the like (amino acid residue of less than 100), low molecular peptide (amino acid residue of less than 10) and the like, but there is no limitation. Furthermore, instead of immobilizing the nicotinamide adenine dinucleotide and/or the derivative thereof on the carbon and/or the inorganic compound, these coenzymes, peptides and the like may be immobilized. Needless to say, various proteins containing enzymes may be immobilized on the carbon and/or the inorganic compound as well as the coenzymes, peptides and nicotinamide adenine dinucleotide and/or the derivative thereof.

In addition, the present technology can adopt the following configuration.
(1) A fuel cell including: a positive electrode; a negative electrode; and a proton conductor provided between the positive electrode and the negative electrode, wherein the negative electrode is configured of an electrode which includes carbon and/or an inorganic compound having pores with a size of 2 nm or more to 100 nm or less on the surface, and in which nicotinamide adenine dinucleotide and/or a derivative thereof are immobilized on the carbon and/or the inorganic compound.
(2) The biofuel cell according to the (1), wherein the carbon and/or the inorganic compound further have pores with a size of 0.5 nm or more and less than 2 nm on the surface.
(3) The fuel cell according to the (1) or (2), wherein the carbon and/or the inorganic compound have pores with a size of 0.5 nm or more and less than 2 nm and pores with a size of 4 nm or more and 20 nm or less on the surface.
(4) The fuel cell according to any one of the (1) to (3), wherein the carbon includes at least one selected from the group consisting of carbon particles, carbon sheets and carbon fibers.
(5) The fuel cell according to the (4), wherein the carbon particles include at least one selected from the group consisting of activated carbon, carbon black and biocarbon.
(6) The fuel cell according to any one of the (1) to (5), wherein the electrode is formed of fibrous carbon.
(7) The fuel cell according to any one of the (1) to (6), wherein an enzyme is further immobilized on the carbon and/or the inorganic compound and the fuel cell includes enzyme and the nicotinamide adenine dinucleotide and/or the derivative.
(8) The fuel cell according to the (7), wherein the fuel cell includes a compound for enzyme immobilization having a portion to be bonded to the carbon and/or the inorganic compound and a portion to be bonded to the enzyme.
(9) The fuel cell according to the (8), wherein the compound for enzyme immobilization is at least one selected from the group consisting of molecules including biotin molecules, fluorescein and chirality and polycyclic aromatic compounds.
(10) The fuel cell according to the (8) or (9), wherein the compound for enzyme immobilization is a pyrene derivative.
(11) The fuel cell according to any one of the (8) to (10), wherein the enzyme is bonded to the carbon and/or the inorganic compound via the compound for enzyme immobilization.
(12) The fuel cell according to any one of the (8) to (11), wherein the compound for enzyme immobilization is bonded to the carbon and/or the inorganic compound inside the pore.
(13) The fuel cell according to any one of the (7) to (12), wherein the enzyme is NAD⁺/NADH-dependent glucose dehydrogenase and diaphorase.
(14) The fuel cell according to any one of the (1) to (13), wherein the inorganic compound is at least one selected from the group consisting of oxides, nitrides, carbides, surfides, surfates, phosphates and chlorides.

### Reference Signs List

11 ... Electrode, 12... Carbon having nanopores, 13... Carbon particle, 13a... Nanopore, 14... carbon sheet, 14a... Nanopore, 15... Carbon fiber, 15a... Nanopore, 16... Nicotinamide adenine dinucleotide and/or a derivative thereof, 17... Fibrous carbon, 18... Skeleton, 19... Enzyme, 20... Electron mediator, 21... Negative electrode, 22... Positive electrode, 23... Electrolyte layer, 41, 42... Ti current collector, 43, 44... Fixing plate, 47... Load, 51... Nicotinamide adenine dinucleotide-immobilized carrier, 61... Compound for enzyme immobilization

## Claims

1. A fuel cell comprising:
a positive electrode;
a negative electrode; and
a proton conductor provided between the positive electrode and the negative electrode,
wherein the negative electrode is configured of an electrode which includes carbon and/or an inorganic compound having pores with a size of 2 nm or more to 100 nm or less on the surface, and in which nicotinamide adenine dinucleotide and/or a derivative thereof are immobilized on the carbon and/or the inorganic compound.

2. The fuel cell according to Claim 1,
wherein the carbon and/or the inorganic compound further have pores with a size of 0.5 nm or more and less than 2 nm on the surface.

3. The fuel cell according to Claim 2,
wherein the carbon and/or the inorganic compound have pores with a size of 0.5 nm or more and less than 2 nm and pores with a size of 4 nm or more and 20 nm or less on the surface.

4. The fuel cell according to Claim 3,
wherein the carbon includes at least one selected from the group consisting of carbon particles, carbon sheets and carbon fibers.

5. The fuel cell according to Claim 4,
wherein the carbon particles include at least one selected from the group consisting of activated carbon, carbon black and biocarbon.

6. The fuel cell according to Claim 5,
wherein the electrode is formed of fibrous carbon.

7. The fuel cell according to Claim 6,
wherein an enzyme is further immobilized on the carbon and/or the inorganic compound and the fuel cell includes the enzyme and the nicotinamide adenine dinucleotide and/or the derivative.

8. The fuel cell according to Claim 7,
wherein the fuel cell includes a compound for enzyme immobilization having a portion to be bonded to the carbon and/or the inorganic compound and a portion to be bonded to the enzyme.

9. The fuel cell according to Claim 8,
wherein the compound for enzyme immobilization is at least one selected from the group consisting of molecules including biotin molecules, fluorescein and chirality and polycyclic aromatic compounds.

10. The fuel cell according to Claim 8,
wherein the compound for enzyme immobilization is a pyrene derivative.

11. The fuel cell according to Claim 8,
wherein the enzyme is bonded to the carbon and/or the inorganic compound via the compound for enzyme immobilization.

12. The fuel cell according to Claim 8,
wherein the compound for enzyme immobilization is bonded to the carbon and/or the inorganic compound inside the pore.

13. The fuel cell according to Claim 7,
wherein the enzyme is NAD⁺/NADH-dependent glucose dehydrogenase and diaphorase.

14. The fuel cell according to Claim 1,
wherein the inorganic compound is at least one selected from the group consisting of oxides, nitrides, carbides, surfides, surfates, phosphates and chlorides.

15. An electronic apparatus comprising:
one or a plurality of fuel cells,
wherein at least one fuel cell includes a positive electrode, a negative electrode and a proton conductor provided between the positive electrode and the negative electrode, and
the negative electrode is configured of an electrode which includes carbon and/or an inorganic compound having pores with a size of 2 nm or more to 100 nm or less on the surface, and in which nicotinamide adenine dinucleotide and/or a derivative thereof are immobilized on the carbon and/or the inorganic compound.

16. The electronic apparatus according to Claim 15,
wherein the carbon and/or the inorganic compound further have pores with a size of 0.5 nm or more and less than 2 nm on the surface.

17. The electronic apparatus according to Claim 16,
wherein the carbon and/or the inorganic compound have pores with a size of 0.5 nm or more and less than 2 nm and pores with a size of 4 nm or more and 20 nm or less on the surface.

18. A nicotinamide adenine dinucleotide-immobilized electrode that is configured of an electrode including carbon and/or an inorganic compound having pores with a size of 2 nm or more and 100 nm or less on the surface in which nicotinamide adenine dinucleotide and/or a derivative are immobilized on the carbon and/or the inorganic compound.

19. The nicotinamide adenine dinucleotide-immobilized electrode according to Claim 18,
wherein the carbon and/or the inorganic compound further have pores with a size of 0.5 nm or more and less than 2 nm on the surface.

20. The nicotinamide adenine dinucleotide-immobilized electrode according to Claim 19,
wherein a charge or at least a functional group having reactivity is given to the carbon and/or the inorganic compound.
